# EUROPEAN PATENT SPECIFICATION

(11) **EP 4 416 603 B1**
(45) Date of publication and mention of the grant of the patent: **29.07.2026**
(21) Application number: 21802175.6
(22) Date of filing: 13.10.2021
(51) Int. Cl.: G06F 16/215, G06F 16/2458

(54) **RECORDS MATCHING TECHNIQUES FOR FACILITATING DATABASE SEARCH AND FRAGMENTED RECORD DETECTION**
DATENSATZABGLEICHTECHNIKEN ZUR ERMÖGLICHUNG EINER DATENBANKSUCHE UND ERKENNUNG FRAGMENTIERTER DATENSÄTZE
TECHNIQUES DE MISE EN CORRESPONDANCE D'ENREGISTREMENTS POUR PERMETTRE LA RECHERCHE DANS DES BASES DE DONNÉES ET LA DÉTECTION D'ENREGISTREMENTS FRAGMENTÉS

(43) Date of publication of application: 21.08.2024
(73) Proprietor: Equifax Inc., Atlanta, GA 30309 (US)
(72) Inventor: SIVARAJ, Sunit, Atlanta, GA 30309 (US); CYZIO, Marek, Atlanta, GA 30309 (US); PATEL, Piyush, Atlanta, GA 30309 (US); KING, Michele, Atlanta, GA 30309 (US); BONDUGULA, Rajkumar, Atlanta, GA 30309 (US)
(74) Representative: Greenwoods
(86) International application number: PCT/US2021/071850
(87) International publication number: WO 2023/063972

(56) References cited:
- WO-A1-2019/157491
- WO-A1-2020/227419
- US-A1- 2021 049 326

## Description

### Technical Field

This disclosure relates generally to computers and digital data processing systems for facilitating database searches and fragmented files detection in the database.

### Background

Databases often store data in records. Each record has one or more identifiers that can be utilized to identify the record. For example, if the record stores data for an entity, the record can include an identifier field indicating the name of the entity, another identifier field indicating an address of the entity, and so on. If the record stores data for a product, the record can include an identifier field indicating the serial number of the product, another identifier field indicating the model of the product, and so on. These identifiers can be used to find records that match a search query containing the identifiers to be matched.

Some traditional database search methods involve finding records whose identifiers exactly match the query identifiers. Such methods often return incomplete results because, for example, some identifiers can be represented in multiple ways (e.g., an address might be written in different ways), some identifiers may be entered mistakenly (e.g., a serial number may be mistyped by one digit), and so on. As a result, records that should have matched the query record are missing from the returned search results.

In addition, the inaccurate matching technique also leads to fragmented files in the database. Given new input data, the traditional database search methods are unable to accurately determine whether a record has already been created in the database for the new data. This leads to duplicate data records being created for the same data, resulting in fragmented files in the database. PCT application WO 2020/227419 A1 describes systems and methods for linking records from different databases. US 2021/049326 A1 discloses the matching of text strings for incorrectly human-entered data, based on the keyboard distance. These documents are considered relevant background art for understanding the invention and its relationship to the prior art.

### Summary

The invention is set out in the present claims. Various embodiments of the present disclosure provide record matching for facilitating database searches and fragmented file detection. In one example, a record-matching computing system includes a processing device and a data repository for storing data records regarding entities. Each data record comprises a numerical identifier and a date identifier. The system further includes a non-transitory computer-readable storage medium having program code executable by the processing device to perform operations. The operations include receiving a query record comprising a first value of the numerical identifier and a first date for the date identifier; and searching the data records for a record matching the query record. The searching comprises retrieving a reference record from the data records, the reference record comprising a second value of the numerical identifier and a second date for the date identifier; generating a numerical identifier score measuring a degree of matching between the first value of the numerical identifier and the second value of the numerical identifier, the numerical identifier score generated based at least in part upon a keyboard distance between mismatching digits of the first value and the second value of the numerical identifier; generating a date identifier score measuring a degree of matching between the first date and the second date; generating an overall matching score by combining at least the numerical identifier score and the date identifier score; and returning the reference record as a matched record to the query record based on the overall matching score exceeding a threshold value.

**In** another example, a method includes one or more processing devices performing operations. The operations include receiving a query record comprising a first value of a numerical identifier; and searching in a set of data records for a matching record of the query record. The searching includes retrieving a reference record from the set of data records, the reference record comprising a second value of the numerical identifier; generating a numerical identifier score measuring a degree of matching between the first value of the numerical identifier and the second value of the numerical identifier, the numerical identifier score generated based on a keyboard distance between mismatching digits of the first value and the second value of the numerical identifier, and optionally a probability distribution of errors over digits of the numerical identifier; generating an overall matching score by combining at least the numerical identifier score and a second identifier score generated for a second identifier of the query record and the reference record; and determining the reference record as a match to the query record based on the overall matching score exceeding a threshold value.

In yet another example, a non-transitory computer-readable storage medium having program code executable by a processing device to perform operations. The operations include receiving a query record comprising a first value of a numerical identifier; and searching in a set of data records for a matching record of the query record. The searching comprises retrieving a reference record from the set of data records, the reference record comprising a second value of the numerical identifier; generating a numerical identifier score measuring a degree of matching between the first value of the numerical identifier and the second value of the numerical identifier, the numerical identifier score generated based on a keyboard distance between mismatching digits of the first value and the second value of the numerical identifier, and optionally a probability distribution of errors over digits of the numerical identifier; generating an overall matching score by combining at least the numerical identifier score and a second identifier score generated for a second identifier of the query record and the reference record; and determining the reference record as a match to the query record based on the overall matching score exceeding a threshold value.

This summary is not intended to identify key or essential features of the claimed subject matter, nor is it intended to be used in isolation to determine the scope of the claimed subject matter. The subject matter should be understood by reference to appropriate portions of the entire specification, any or all drawings, and each claim.

The foregoing, together with other features and examples, will become more apparent upon referring to the following specification, claims, and accompanying drawings.

### Brief Description of the Drawings

FIG. 1 is a block diagram depicting an example of a computing environment in which a record-matching computing system can accurately match a query record to records in a database according to certain aspects of the present disclosure.
FIG. 2 is a block diagram depicting an example of a record matching service configured to determine whether a reference record matches a query record, according to certain aspects of the present disclosure.
FIG. 3 is a flowchart depicting an example of a process for determining whether a reference record matches a query record based on identifiers of the records, according to certain aspects of the present disclosure.
FIG. 4 is a diagram depicting examples of data attributes generated for a numeric identifier that can be used to make a matching decision, according to certain aspects of the present disclosure.
FIG. 5 is a diagram depicting examples of data attributes generated for an address identifier that can be used to make a matching decision, according to certain aspects of the present disclosure.
FIG. 6 is a diagram depicting examples of data attributes generated for a name identifier that can be used to make a matching decision, according to certain aspects of the present disclosure.
FIG. 7 is a diagram depicting examples of data attributes generated for a date identifier that can be used to make a matching decision, according to certain aspects of the present disclosure.
FIG. 8 is a diagram illustrating compound scores used to generate a matching decision, according to certain aspects of the present disclosure.
FIG. 9 is a flowchart depicting an example of a process for determining whether a reference record matches a query record based on a machine learning model, according to certain aspects of the present disclosure.
FIG. 10 is a flowchart depicting an example of a process for training a machine learning model configured to determine a matching decision for a pair of data records, according to certain aspects of the present disclosure.
FIG. 11 is a diagram illustrating the data flow in the training of the machine learning model, according to certain aspects of the present disclosure.
FIG. 12 is a flowchart depicting an example of a process for detecting fragmented records in a database, according to certain aspects of the present disclosure.
FIG. 13 is a diagram illustrating an example of identifying records for merging, according to certain aspects of the present disclosure.
FIG. 14 is a flowchart depicting an example of a process for identifying cliques from a connected component for merging, according to certain aspects of the present disclosure.
FIG. 15 is a block diagram depicting an example of a computing system suitable for implementing aspects of the techniques and technologies presented herein.

### Detailed Description

Certain aspects and features of the present disclosure involve record matching to facilitate database searches and fragmented file detection for the database. A record-matching computing system can search in a database for records that match a query record based on one or more identifiers. To perform the matching, the record-matching computing system can generate an identifier score for each identifier based on the values of the identifiers in the query record and a reference record to be compared. The record-matching computing system can further determine the matching decision between the query record and the reference record based on the identifier scores or through a machine learning model trained to predict a matching decision from identifier scores and other identifier attributes generated for a pair of records. Records that match the query record can be returned in the search results. The record-matching computing system can further be configured to detect fragmented files by detecting matching records in the database.

The following non-limiting example is provided to introduce certain embodiments. In this example, a record-matching computing system can receive a query record including multiple identifiers such as a numerical identifier and a name identifier. The record-matching computing system can search data records in a data repository for records that match the query record. Each data record in the data repository can also include the identifiers. To perform the search, the record-matching computing system can retrieve a reference record from the data records and further generate an identifier score for one or more identifiers. The identifier score measures the degree of matching between the identifier in the query record and the corresponding identifier in the reference record. For example, if the identifier is a numerical identifier, such as a serial number of a product, a MAC address of a computing component, or a social security number of an individual, the identifier score can be generated based on the digits contained in the two identifier values. For example, the numerical identifier score can be generated based on whether the difference between the digits of the two numerical identifier values are due to unintentional mistakes or they are truly different. This can be measured, for example, by the keyboard distance between mismatching digits of the numerical identifier in the query record and the numerical identifier in the reference record, the probability distribution of errors over digits of the numerical identifier, and others.

Likewise, if the identifiers include a name identifier, such as the name of the product, the name of an individual or entity, the record-matching computing system can generate a name identifier score based on the name in the query record and the name in the reference record. The name identifier score measures the degree of matching between the two names. Similar to the numerical identifier score, the name identifier score can be generated based on whether the difference between the two names is due to unintentional mistakes or they are truly different. For instance, multiple phonetic algorithms for matching components of names based on similar pronunciation, distance measures, such as Levenshtein distance or Jaccard distance, can be used to generate the name identifier score.

The identifiers may further include an address identifier, such as the physical address of an individual or an organization. The record-matching computing system can generate an address identifier score based on the address in the query record ("query address") and the addresses in the reference record ("reference addresses") to measure the degree of matching between the query address and the reference addresses. The address identifier score can be generated based on matching scores for individual address components of the query address and the reference addresses and respective positions of the reference addresses in the reference record.

**In** further examples, the identifiers may include a date identifier, such as the manufacturing date of a product or an item, the date of birth of an individual, or the establishment or registration date of an organization. The record-matching computing system can generate the date identifier score to measure the degree of matching between the date in the query record and the date in the reference record. The date identifier score can be generated by calculating similarities between the two dates based on years, months, and days in the two dates and generating the date identifier score based on a weighted combination of these similarities. Other identifier scores can be generated based on the nature of the identifiers.

With the identifier scores, the record-matching computing system can generate one or more aggregated scores, also referred to as "compound scores." A compound score can be a surface area score that combines pair-wise identifier scores to form a composite score that reflects the quality of a match. The combination of pair-wise identifier scores, such as the multiplication, indicates the area of a shape, such as a triangle or a quadrilateral, formed by the pair of identifier scores. A compound score may also be a volume score that combines three or more identifier scores to form a composite score that reflects the quality of a match. The combination of multiple identifier scores, such as the multiplication, indicates the volume of an object, such as a prism or a pyramid, formed by the multiple identifier scores. The record-matching computing system can determine if the query record matches the reference record based on one or more of the compound scores, such as by comparing a compound score or a combination of multiple compound scores with a threshold value.

**In** further examples, the record-matching computing system employs a machine learning model to determine the matching decision between the query record and the reference record. The input to the machine learning model can include the identifier scores and the compound scores discussed above. In addition, the record-matching computing system can also generate other attributes (also referred to as "matching attributes" or "identifier attributes") for each of the identifiers as input to the machine learning model. These attributes can include, for example, a numerical identifier attribute measuring the total number of positions matched between the numerical identifier in the query record and the numerical identifier in the reference record, an address attribute generated based on a geographical distance between the query address and the reference address, an address frequency attribute indicating the number of records in the data records having a same address as the reference address, a name frequency attribute indicating the frequency of the name in the reference record, and so on.

A training sample for the machine learning model thus includes a set of training matching attributes generated for a pair of data records as discussed above. The training sample further includes a matching label indicating a match or a no-match between the pair of data records. In some examples, the matching labels in the training samples are not ground truth labels and might include inaccurate labels. The training process of the machine learning model can involve both obtaining the ground truth labels and training the machine learning model. In some examples, the machine learning model, also referred to as a "matching model," may be a decision tree model, a random forest, a repeated incremental pruning to produce error reduction (RIPPER)-based model, or any other machine learning model that can be configured to predict the match or no match between a pair of input data records.

To perform the training, the record-matching computing system can train the matching model using the initial set of training samples. The record-matching computing system can further determine predicted classifications for the sets of training samples by inputting the sets of training matching attributes to the initially trained matching model. Based on the predicted classifications, the record-matching computing system identifies a set of the training samples as misclassified training samples if the predicted classifications of the set of training samples are different from the respective matching labels.

To correct the labeling of the misclassified training samples, the record-matching computing system can generate auxiliary classifications for each of the misclassified training samples using multiple auxiliary models. The auxiliary models are configured to operate under different principles and each can be configured to generate a classification of match or no-match based on matching attributes associated with a pair of records. Each of the auxiliary models can be trained using the training samples of the matching model. The attributes input to each of the auxiliary models can include the input attributes for the matching model or a subset of these input attributes, such as the identifier scores and the compound scores.

The multiple output classifications generated by the auxiliary models can be compared to determine if the labels of the misclassified training samples need to be corrected. For example, for a training sample, if the multiple output classifications by the auxiliary models are consistent with the classification of the matching model, the record-matching computing system can change the matching label of the training sample to be consistent with the classification output by the matching model. If the multiple output classifications by the auxiliary matching models include conflicting classifications, the record-matching computing system can determine the matching label for the training sample based on a combination of the original matching label, the classification by the matching model, and the output classifications by the auxiliary models, such as through a majority voting. Alternatively, or additionally, the record-matching computing system can output the training sample to another system for further analysis to determine the correct matching label.

The training samples with the updated or corrected matching labels can be used to re-train the matching model and the auxiliary models. The above training process can be repeated until there are no misclassified training samples. In other words, the matching labels in the training samples are the same as the predicted classifications by the matching model. At this stage, the training samples contain ground truth matching labels, and the matching model is trained and can be used to predict the match or no-match classification for an input pair of records based on the associated attributes. To perform the classification, the record-matching computing system can generate the matching attributes for a pair of records, such as a query record and a reference record. The record-matching computing system further inputs the matching attributes to the matching model to obtain the classification of match or no-match between the pair of records. In some configurations, the matching model is also configured to output a confidence score for the classification decision. If a match is found, the reference record can be returned as a match to the query record.

The record-matching computing system can further be configured to detect fragmented files (or fragmented records) in the database. Fragmented files or records refer to multiple records that contain the information for the same item that should have been stored in one record. Fragmented records unnecessarily increase the size of the database and also increases the complexity of finding matching records for a query record. As such, detecting and merging fragmented records can reduce the storage space used for storing the database and reduce the computational complexity involved in the database search.

To detect the fragmented records, the record-matching computing system can determine matching scores and matching decisions for pairs of records in the database. The matching score for a pair of records can be the compound score generated based on identifier attribute scores or the confidence score of a classification decision output by the matching model. The matching decision for a pair of nodes indicates whether the pair of nodes match with each other. The matching decision can be determined by the record-matching computing system based on the compound score or the matching model as discussed above or any other methods. Based on the matching scores and matching decisions, the record-matching computing system can generate a graph. The nodes of the graph can represent the data records, and the edges of the graph can indicate the matching relationship among the records. In some examples, an edge can be created between two nodes if the records represented by the two nodes match with each other according to the matching decision. Alternatively, or additionally, the edges of the graph can represent the data records, and the nodes of the graph can indicate the matching relationship among the records. Various other ways of building the graph can also be used.

The record-matching computing system can further identify connected components in the graph. Based on the connected components, qualified connected components that can be merged are identified. A connected component can be examined to identify qualified connected components whose minimum connectivity is above a threshold value of connectivity. In some examples, the threshold value of connectivity can be set to be the number of nodes of the qualified connected component minus one. In these examples, a qualified connected component is a clique.

For each of the qualified connected components, the record-matching computing system can merge the records represented by the nodes in the respective qualified connected components. The record-matching computing system can further update the graph based on the merge and identify qualified connected components in the updated graph. This process continues until no more qualified connected components can be identified.

Certain aspects described herein overcome the limitations of previous techniques and provide improvements to database technology by matching data records based on multiple identifier attributes that take into account the uncertainty of the identifiers, the likelihood of inadvertent mistakes in entering the identifiers into the data records, and various nuances in the identifiers. Record matching based on these identifier attributes thus allows the correct matching records to be retrieved than the traditional searching techniques, thereby increasing the accuracy of the search results. In addition, the fragmented file detection can reduce the size of the database and thus reduce the storage space used to store the database. Reducing the size of the database also reduces the computational complexity of searching the database for a given query record, thereby reducing the consumption of computing resources, such as CPU time and memory space. Furthermore, the record matching techniques presented herein also allow for accurate detection of fragmented files in the database and thus increase the efficiency of the fragmented file detection.

These illustrative examples are given to introduce the reader to the general subject matter discussed here and are not intended to limit the scope of the disclosed concepts. The following sections describe various additional features and examples with reference to the drawings in which like numerals indicate like elements, and directional descriptions are used to describe the illustrative examples but, like the illustrative examples, should not be used to limit the present disclosure.

### Operating Environment Example for Record Matching and Fragmented File Detection

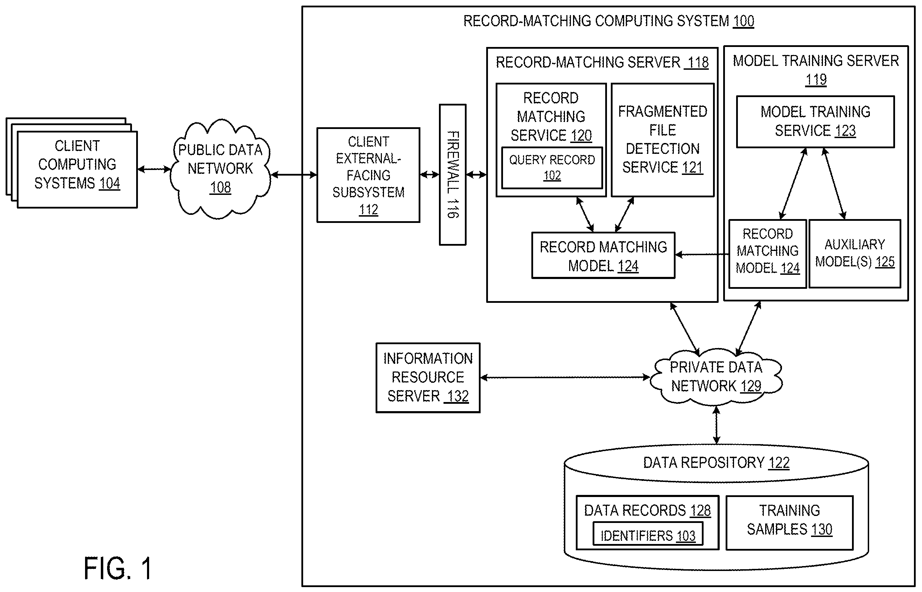

FIG. 1 is a block diagram depicting an example of a computing environment in which a record-matching computing system can accurately match a query record to records in a database, according to certain aspects of the present disclosure. FIG. 1 depicts examples of hardware components of a record-matching computing system 100, according to some aspects. The record-matching computing system 100 is a specialized computing system that may be used for processing large amounts of data using a large number of computer processing cycles. The number of devices depicted in FIG. 1 are provided for illustrative purposes. Different numbers of devices may be used. For example, while certain devices or systems are shown as single devices in FIG. 1, multiple devices may instead be used to implement these devices or systems.

As shown in FIG. 1, the record-matching computing system 100 can include a record-matching server 118, a model training server 119, a private data network 129, data repository 122 storing data records 128, firewall 116, a client external-facing subsystem 112.

The data repository 122 can include internal databases or other data sources that are stored at or otherwise accessible via the private data network 129. The data repository 122 can include data records 128, and each data record 128 includes one or more identifiers 103. An identifier 103 can include any information that can be used alone or in combination with other identifiers to uniquely identify a data record 128. For example, if the data records 128 represent data associated with an individual or entity, the identifiers 103 in each data record 128 can include information that can be used on its own to identify an individual or entity. Non-limiting examples of such information include one or more of a legal name, a company name, a social security number, a credit card number, a date of birth, an e-mail address, etc. In other aspects, the identifiers 103 can include information that can be used in combination with other information to identify an individual or entity. Non-limiting examples of such consumer identification data include a street address or other geographical location, etc.

In some examples, the identifiers 103 can be classified into four categories: numerical identifiers such as the social security number, credit card number, name identifiers such as the legal name of the individuals or company name, address identifiers such as the street address of the individual or entity, and date identifiers such as the date of birth of an individual. Depending on the nature of data stored in the data records 128, not all four categories of identifiers are available for the data record 128. For example, if the data records 128 represent data associated with products or other types of physical items, the numerical identifier in each data record 128 can include a serial number of a product, a MAC address of a network component; the name identifier can include the name of the product or item; the address identifier can include the address or location where the product or item is manufactured or produced; the date-based identifier can include the manufacturing date of the product or item. If the data records 128 represent data associated with digital items such as a webpage or a digital file, the numerical identifier in each data record 128 can include an IP address of the webpage; the name identifier can include the domain name of the webpage or the name of the digital file; the date-based identifier can include the date when the webpage or digital file is created, accessed, or modified. The data record 128 can include other information about the associated entity or item, such as the employment data of the individual, description, and specification of the product, and so on.

The record-matching server 118 can operate a record matching service 120 for matching data records. For a given query record 102, the record matching service 120 is configured to find matching records from the data records 128 stored in the data repository 122. The query record 102 can have the same data structure as the data record 128 or at least include the identifies 103. In some examples, the record matching service 120 can determine the matching records based on identifiers of the data records 128 and the query record 102. The record matching service 120 can calculate identifier scores for individual identifiers and further generate compound scores by combining the identifier scores. Based on the compound scores, the record matching service 120 can determine whether a given data record 128 (also refers to as a "reference record") matches the query record 102, such as by comparing the compound score with a threshold value.

In a further example, the record matching service 120 can generate more identifier attributes in addition to the identifier scores. For example, the record matching service 120 can generate identifier attributes by taking into account the uncertainty of the data in the identifiers, the likelihood of inadvertent mistakes in entering the identifiers into the data records, and various nuances in the identifiers.

To generate the identifier attributes including the identifier scores, the record matching service 120 may communicate with other resources, external or internal to the record-matching computing system 100, to obtain information. For example, the record matching service 120 may generate an attribute for the address identifiers of the query record and the reference record to measure the geographical distance between the two addresses. To do so, the record matching service 120 may communicate with an information resource server 132 to obtain the longitude and latitude data associated with the two addresses. The information resource server 132 may be configured to provide other information used for calculating the identifier attributes, such as the standardized address for the address identifier. There may be more than one information resource server from which the record matching service 120 can obtain information. While FIG. 1 shows that the information resource server 132 is inside the record-matching computing system 100 accessible through the private data network 129, the information resource server 132 may be a server external to the record-matching computing system 100 and accessed through the public data network 108.

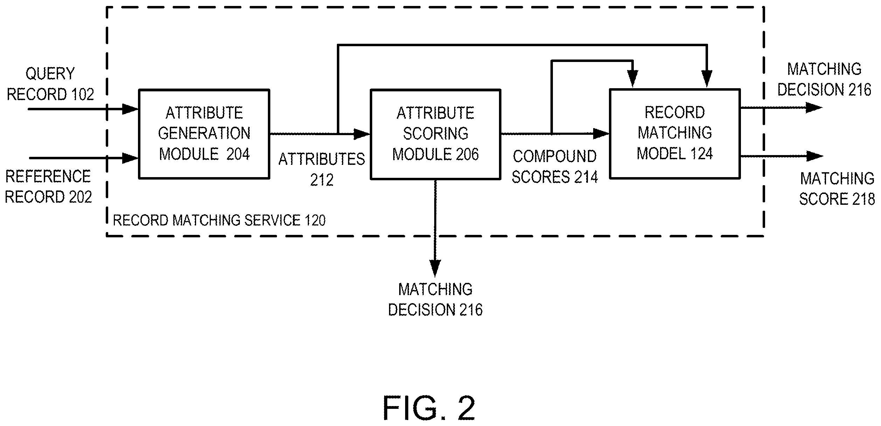

Based on the generated identifier attributes, the record matching service 120 can employ a record matching model 124 (or matching model 124) to determine whether the reference record matches the query record 102. The record matching model 124 is configured to take the various identifier attributes as input and output the classification decision of match or no-match for the pair of data records. Additional details regarding determining whether a reference record matches the query record 102 based on identifier attributes are discussed below with regard to FIGS. 2-9.

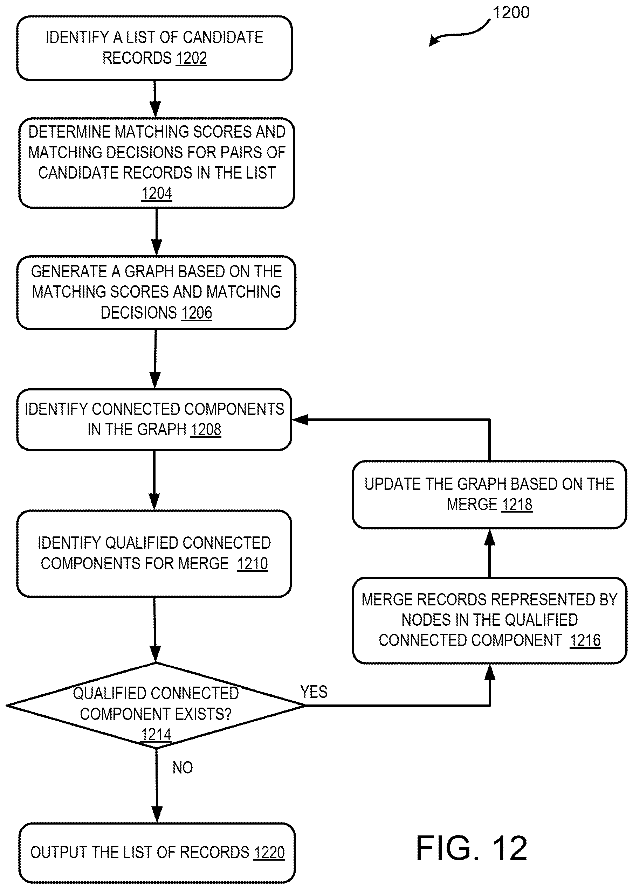

The record-matching server 118 can further include a fragmented file detection service 121 configured to detect fragmented records in the data record 128. The fragmented file detection service 121 can examine pairs of data records 128 to determine a matching decision and associated matching score between the pair of records. The matching score can be the compound scores determined based on the attribute scores generated for the pair or the confidence score output by the record matching model 124 when determining the classification for the pair of records. Based on the matching decisions and matching scores between pairs of data records, the fragmented file detection service 121 can build a graph with nodes representing the data records and edges representing the matching decisions. Fragmented data records can be found by identifying connected components with a high degree of connectivity in the graph. The data records included in such a connected component can be determined to be fragmented records of one record and can be merged into a single data record. Additional details regarding detecting and merging fragmented records are provided below with regard to FIGS. 12-14.

To train the record matching model 124, the record-matching computing system 100 can include the model training server 119 configured to operate a model training service 123 for training the record matching model 124 for use by the record matching service 120 and the fragmented file detection service 121. The model training service 123 can train the matching model 124 using an initial set of training samples 130 and further determine predicted classifications for the sets of training samples 130 using the initially trained matching model. Based on the predicted classifications, the record-matching computing system identifies misclassified training samples based on the predicted classifications of the set of training samples being different from the respective matching labels in the training samples 130.

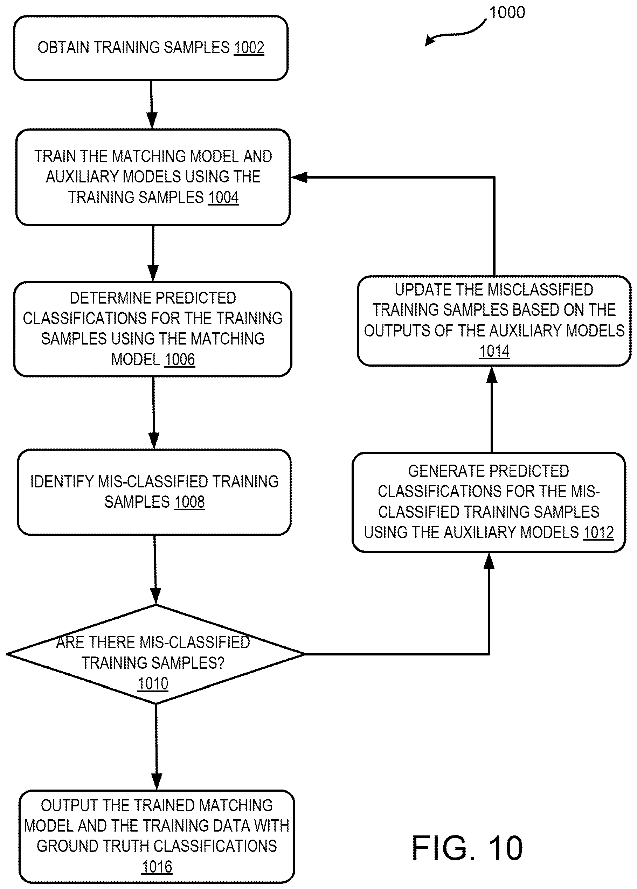

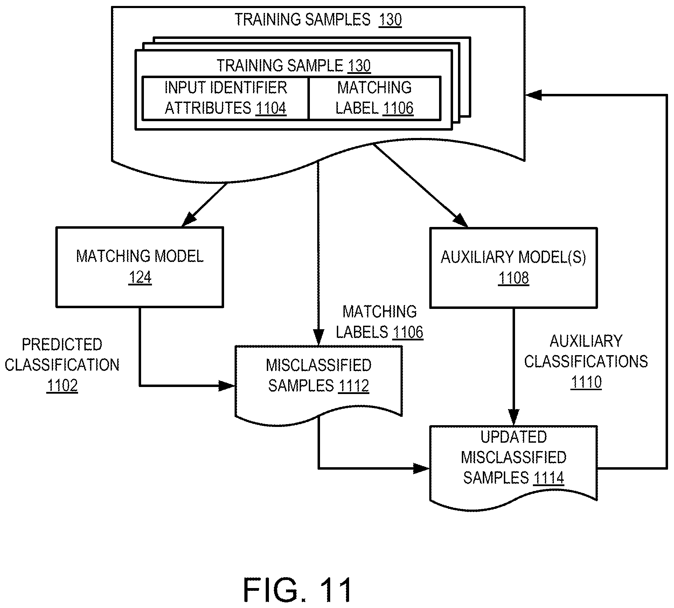

To correct the matching labels of the misclassified training samples, the model training service 123 can generate auxiliary classifications for each of the misclassified training samples using multiple auxiliary models 125. These auxiliary classifications can be compared to determine whether and how to correct the labels of the misclassified training samples. The training samples 130 with the updated or corrected matching labels can be used to re-train the matching model 124. This training process can be repeated until there are no misclassified training samples in the training samples 130. In this way, ground truth matching labels for the training samples 130 can be obtained in conjunction with training the matching model 124. Additional details regarding training the record matching model 124 and determining ground truth labels for the training samples 130 are provided below with regard to FIGS. 10 and 11.

The record-matching computing system 100 can communicate with various other computing systems such as client computing systems 104. For example, the record-matching computing system 100 may include one or more provider external-facing devices that communicate with data provider systems for receiving the data regarding entities or other items to be stored in data records in the data repository 122. The record-matching server 118 may also communicate with the client computing system 104 by way of a client external-facing subsystem 112.

The client computing systems 104 may interact, via one or more public data networks 108, with various external-facing subsystems of the record-matching computing system 100. For instance, an individual can use a client computing system 104 to attempt to search in the data records 128 for a match to a query record 102. The client computing system 104 may generate the query record 102 and send it to the record-matching server 118. Alternatively, the client computing system 104 can send data to be used for the search in any format and the record-matching server 118 can generate the query record 102 based on the received information. To request the search, the client computing system 104 can communicate with the client external-facing subsystem 112. The client external-facing subsystem 112 can selectively prevent the client computing system 104 from accessing or searching in the data repository 122. For example, the client external-facing subsystem 112 can determine whether the client computing system 104 can access or search in the databases based on an identifier of the client computing system and a record stored in a secure location in the client external-facing subsystem 112, such as a memory in a basic input-output system (BIOS) of the client external-facing subsystem 112. The record can indicate the access permission of a client computing device and can be determined based on various factors such as whether the client computing system is an authorized system to access a certain database, whether the timing of the access is within an authorized window, and so on.

To determine if a client computing system 104 can access a certain database, the client external-facing subsystem 112 can retrieve the record associated with the client computing system 104 from the secure location and encrypt the record and other associated data using a cryptographic key. Similarly, the client external-facing subsystem 112 can encrypt the record submitted by the client external-facing subsystem 112 using the same cryptographic key to determine a match. A match indicates that the client computing system 104 can access the database. The client external-facing subsystem 112 can prevent the client computing system 104 from accessing the databases if there is no match.

The client external-facing subsystem 112 can be communicatively coupled, via a firewall 116, to one or more computing devices forming the private data network 129. The firewall 116, which can include one or more devices, can create a secured part of the record-matching computing system 100 that includes various devices in communication via the private data network 129. In some aspects, by using the private data network 129, the record-matching computing system 100 can house the data repository 122 in an isolated network (i.e., the private data network 129) that has no direct accessibility via the Internet or another public data network 108.

Each client computing system 104 may include one or more third-party devices, such as individual servers or groups of servers operating in a distributed manner. Client computing system 104 can include any computing device or group of computing devices operated by a seller, lender, or other provider of products or services. Client computing system 104 can include one or more server devices. The one or more server devices can include or can otherwise access one or more non-transitory computer-readable media. The client computing system 104 can also execute an online service. The online service can include executable instructions stored in one or more non-transitory computer-readable media.

Each communication within or with the record-matching computing system 100 may occur over one or more data networks, such as the public data network 108, the private data network 129, or some combination thereof. A data network may include one or more of a variety of different types of networks, including a wireless network, a wired network, or a combination of a wired and wireless network. Examples of suitable networks include the Internet, a personal area network, a local area network ("LAN"), a wide area network ("WAN"), or a wireless local area network ("WLAN"). A wireless network may include a wireless interface or a combination of wireless interfaces. A wired network may include a wired interface. The wired or wireless networks may be implemented using routers, access points, bridges, gateways, or the like, to connect devices in the data network.

A data network may include network computers, sensors, databases, or other devices that may transmit or otherwise provide data to the record-matching computing system 100. For example, a data network may include local area network devices, such as routers, hubs, switches, or other computer networking devices. The data networks depicted in FIG. 1 can be incorporated entirely within (or can include) an intranet, an extranet, or a combination thereof. In one example, communications between two or more systems or devices can be achieved by a secure communications protocol, such as secure Hypertext Transfer Protocol ("HTTPS") communications that use secure sockets layer ("SSL") or transport layer security ("TLS"). In addition, data or transactional details communicated among the various computing devices may be encrypted. For example, data may be encrypted in transit and at rest.

The record-matching computing system 100 can include one or more record-matching servers 118 and one or more model training servers 119. The record-matching server 118 or the model training servers 119 may be a specialized computer or other machine that processes the data received at the system record-matching computing system 100. The record-matching server 118 or the model training servers 119 may include one or more other systems. For example, the record-matching server 118 or the model training servers 119 may include a database system for accessing the network-attached storage unit, a communications grid, or both. A communications grid may be a grid-based computing system for processing large amounts of data.

The record-matching server 118 or the model training servers 119 can include one or more processing devices that execute program code, such as the record matching service 120, the fragmented file detection service 121, or the model training service 123. The program code can be stored on a non-transitory computer-readable medium. While FIG. 1 shows that the record-matching server 118 and the model training server 119 are two separate servers, the function of these two servers can be implemented in a single server or a group of servers.

The record-matching computing system 100 may also include one or more network-attached storage units on which various repositories, databases, or other data structures are stored. Examples of these data structures are the data repository 122. Network-attached storage units may store a variety of different types of data organized in a variety of different ways and from a variety of different sources. For example, the network-attached storage unit may include storage other than the primary storage located within the record-matching server 118 or the model training server 119 that is directly accessible by processors located therein. In some aspects, the network-attached storage unit may include secondary, tertiary, or auxiliary storage, such as large hard drives, servers, virtual memory, among other types. Storage devices may include portable or non-portable storage devices, optical storage devices, and various other mediums capable of storing and containing data. A machine-readable storage medium or computer-readable storage medium may include a non-transitory medium in which data can be stored and that does not include carrier waves or transitory electronic signals. Examples of a non-transitory medium may include, for example, a magnetic disk or tape, optical storage media such as compact disk or digital versatile disk, flash memory, memory, or memory devices.

In some aspects, the record-matching computing system 100 can implement one or more procedures to secure communications between the record-matching computing system 100 and other client systems. Non-limiting examples of features provided to protect data and transmissions between the record-matching computing system 100 and other client systems include secure web pages, encryption, firewall protection, network behavior analysis, intrusion detection, etc. In some aspects, transmissions with client systems can be encrypted using public-key cryptography algorithms using a minimum key size of 128 bits. In additional or alternative aspects, website pages or other data can be delivered through HTTPS, secure file-transfer protocol ("SFTP"), or other secure server communications protocols. In additional or alternative aspects, electronic communications can be transmitted using Secure Sockets Layer ("SSL") technology or other suitable secure protocols. Extended Validation SSL certificates can be utilized to clearly identify a website's organization identity. In another non-limiting example, physical, electronic, and procedural measures can be utilized to safeguard data from unauthorized access and disclosure.

### Examples of Record Matching Operations

FIG. 2 is a block diagram depicting an example of a record matching service 120 configured to determine whether a reference record matches a query record, according to certain aspects of the present disclosure. As shown in FIG. 2, the record matching service 120 can include an attribute generation module 204 configured to generate various identifier attributes 212 for a pair of input data records: a query record 102 and a reference record 202. The identifier attributes 212 can include attributes for each of the identifiers included in the pair of records, such as the numerical identifier, the name identifier, the address identifier, the date identifier, and so on. Whether a data field in the query record 102 and the reference device 202 is an identifier can be pre-determined or provided as an input to the attribute generation module 204. The identifier attributes 212 can be generated to capture the uncertainty of the identifiers, the likelihood of inadvertent mistakes in entering the identifiers into the data records, and various nuances in the identifiers.

In some examples, the identifier attributes 212 include an identifier score for each of the identifiers. An identifier score for a particular identifier is configured to measure a degree of matching between the value of the identifier in the query record 102 and the value of the identifier in the reference device 202. In some examples, the identifier scores can be used to determine the matching decision between the query record 102 and the reference record 202. To do so, the identifier scores can be input to an attribute scoring module 206, where the identifier scores are combined to generate the matching decision 216. In one example, the attribute scoring module 206 can generate one or more compound scores 214 based on the identifier scores. A matching decision 216 can be made based on a comparison of the compound scores 214 with one or more threshold values.

In further examples, the record matching service 120 can use the matching model 124 to determine the match or no-match between the query record 102 and reference device 202. The input to the record matching model 124 can include the identifier attributes 212 and the compound scores 214 generated by the attribute scoring module 206. The output can include the matching decision 216 which includes a classification of a match (indicating the query record 102 and the reference device 202 match to each other) or a no-match (indicating the query record 102 and the reference device 202 do not match to each other). In some implementations, the record matching service 120 can also obtain a matching score 218 from the record matching model 124 to indicate the confidence of the matching decision 216. Depending on the record matching model 124, the matching score 218 can be determined based on the data processed at the output layer of the model or based on data at multiple layers or nodes of the model. In the example where the record matching model 124 is a random forest model, the matching score 218 can be determined based on the error of the classification or prediction. This error can be calculated by the number of trees in the random forest that classify or predict an instance as one class in comparison to the number of trees that predict the instance as another class. If the record matching model 124 is a decision tree model, the matching score 218 can be determined similarly. For example, the error for each leaf node of the decision tree can be estimated by estimating the training set error for each leaf node. The model score for a test instance which passes through the leaf node can be determined as the accuracy of the predictions by the leaf node predicts for the training set instances. In other words, the record matching model 124 can contain both information on how to decide if a pair of input records is a match or no-match and the information on what score to assign to the decision. In some examples, the score can be also a set of true or false attributes, descriptive attributes, etc.

In the following, data records 128 storing information for individuals or entities are used as an example to show the record matching and fragmented file detection technique. The same technique can be applied to other types of data records with one or more identifiers. In the following example, each of the data record 128 and the query record 102 includes one or more of a numerical identifier such as a social security number of an individual, a name identifier such as the name of the individual, an address identifier such as the residential address of the individual, and a date identifier such as the date of birth of the individual.

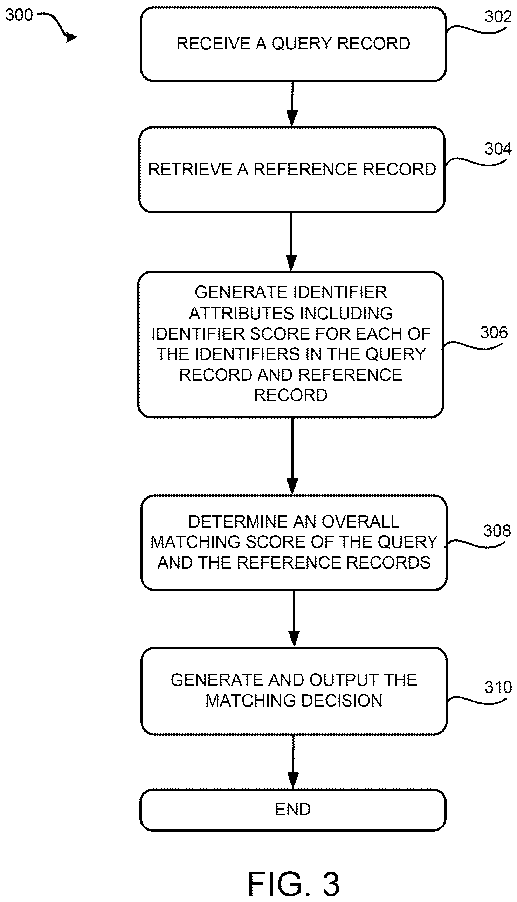

FIG. 3 is a flowchart depicting an example of a process 300 for determining whether a reference record 202 matches a query record 102 based on identifiers of the records, according to certain aspects of the present disclosure. For illustrative purposes, the process 300 is described with reference to implementations described above with respect to one or more examples described herein. Other implementations, however, are possible. In some aspects, the operations in FIG. 3 may be implemented in program code that is executed by one or more computing devices such as the record-matching server 118 depicted in FIG. 1. In some aspects of the present disclosure, one or more operations shown in FIG. 3 may be omitted or performed in a different order. Similarly, additional operations not shown in FIG. 3 may be performed.

At block 302, the process 300 involves receiving a query record 102 that contains one or more identifiers that can be used for matching. As discussed above with respect to FIG. 1, the record-matching server 118 may receive the query record 102 from a client computing system 104 in a request to find matching records in the data record 128, or generate the query record 102 based on the information contained in the request received from the client computing system 104. In other examples, the query record 102 may be generated when the record-matching computing system 100 receives new data, for example from an external data source, to be stored as a data record 128 in the data repository 122. The record-matching server 118 generates the query record 102 based on the information in the received new data. If the record-matching server 118 finds no match for the query record 102 in the data record 128, a new data record 128 can be created in the data repository 122 to store the new data; otherwise, the received new data will be used to update the data record 128 that matches the query record 102. In this way, fragmented records can be avoided.

At block 304, the process 300 involves retrieving, from the data records 128, a reference record 202 that contains the one or more identifiers to be used for matching. In some examples, the reference record 202 may be a record submitted by another system for matching purposes rather than obtained from the data records 128 in the data repository 122.

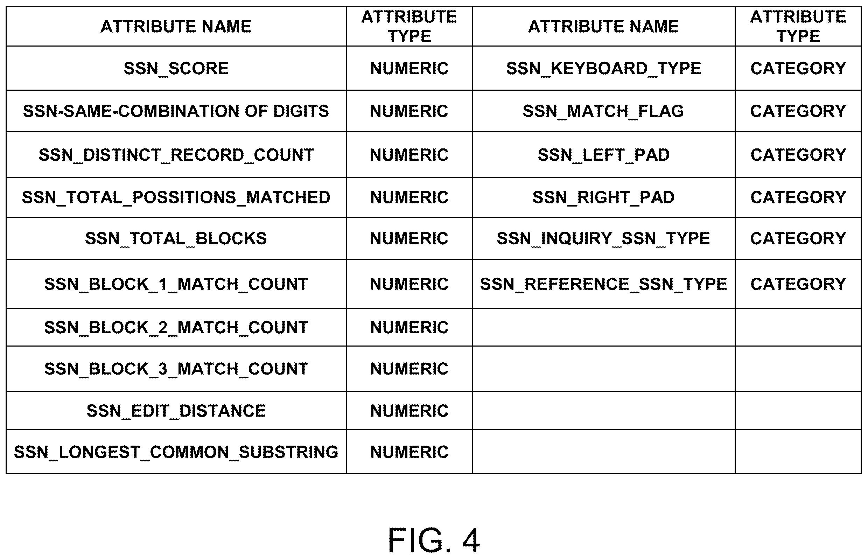

At block 306, the process 300 involves generating identifier attributes for each of the identifiers in the query record 102 and the reference record 202. FIGS. 4-7 show example identifier attributes that can be generated for different identifiers. In FIG. 4, examples of data attributes generated for a numeric identifier, the social security number (SSN) in this example, are shown. The attributes for the SSN can include numeric attributes and categorical attributes as listed in FIG. 4.

The attributes include an identifier score for the SSN, denoted as ssn_score, for measuring the degree of matching between the SSN in the query record 102 and the SSN in the reference device 202. In some examples, each digit of the SSN can be assigned an equal portion of points contributing to the final ssn_score. The exact match of digit to digit between the two SSNs in the pair of records can be assigned full points while partial points can be awarded for digits matched using other combinations of matching techniques. The matching techniques that can be used include left and right padded matching, keyboard distance 1D matching, keyboard distance 2D matching, and error probability based on SSN digit position matching.

Left and right padded matching can be used when at least one of the two SSNs is missing some digits and thus have fewer than nine digits. This can occur, for example, when data furnishers drop leading and trailing zeros. In those cases, zeros or another dummy value can be padded to the left or to the right side of the incomplete SSN to make it a 9-digit value for comparison. The keyboard distance matching techniques are used as an alternative to the vanilla Levenshtein edit distance algorithm to better capture typographical errors in the SSN values, because Levenshtein edit distance does not account for the proximity of keys in a keyboard. Since typographical errors tend to occur closer to the actual key, to determine the keyboard distance, a weighting factor can be introduced into the edit distance algorithm where mismatching keys far away from each other are penalized more than mismatching keys closer to each other in the keyboard. Depending on the layout of the keyboard used for calculating the keyboard distance, the keyboard distance is calculated as keyboard distance 1D for 1D keyboard and keyboard distance 2D for 2D keyboard. In some examples, multiple keyboard layouts can be used and models or methods specific to each one of the keyboard layouts can be used to calculate the keyboard distances.

Further, the positional error probability can be used to determine the match or distance between two SSN values. Typos in SSN are typically not equally distributed between all nine digits (or indexes) of the SSN. Some digits or indexes are more easily mistyped than others. As such, a probability distribution can be built to estimate the probability of errors for each of the nine digits in an SSN. For example, the probability distribution can be built based on the SSNs contained in the data records 128, other dataset including SSNs for a large number of individuals, or a combination of both. If an error occurs in a digit that has a higher probability of being mistyped than another digit, then the matching score can be higher than the case where a mistype occurs in a low error probability index. Other matching techniques can also be used to determine the degree of a digit of the SSN in one data record matching the corresponding digit of the SSN in another data record. If different matching techniques are used for one digit, the matching score or distance can be combined linearly or nonlinearly to determine the matching points for this digit. The matching points for all nine digits may be combined and normalized to reach the final value for ssn_score.

In addition to the ssn_score, other attributes may be generated for the numerical identifier SSN. For example, as shown in FIG. 4, these attributes can include attributes measuring different aspects of the SSN. For example, ssn_total_positions_matched can be used to measure the total number of positions matched between the two SSNs. The positions could be matched digit to digit or through keyboard distance (e.g., the keyboard distance being smaller than a threshold). ssn_distinct_cid_count represents the total number of data records in the data repository 122 that have the SSN value in the query record 102 and the reference record 202. ssn_same_combination_of_digits reports the total digits that were common between SSNs. ssn_block_1_match_count indicates the total digits matched in the first block of SSN (first 3 digits); ssn_block_2_match_count indicates the total digits matched in the second block of SSN (middle 2 digits); ssn_block_3_match_count indicates the total digits matched in the third block of SSN (last 4 digits); ssn_total_blocks indicates the total blocks out of the three that had all digits matched. ssn_edit_distance represents the Levenshtein edit distance between the two SSNs. ssn_longest_common_substring can measure the longest common substring between the two SSNs.

Categorical attributes for the SSN identifier can include ssn_keyboard_type indicating whether a 1D or a 2D keyboard layout was used in the matching if the SSN score algorithm uses the keyboard distance. ssn_left_pad indicates that left padding was used in scoring and ssn_right_pad indicates that right padding was used in scoring. ssn_match_flag indicates the type of matching used to obtain the final ssn_score, such as the exact digit to digit matching or keyboard-distance-based matching. ssn_inquiry_ssn_type and ssn_reference_ssn_type indicate the types of the SSN in the query record 102 and the reference record 202, respectively. The types of an SSN can include, for example, complete SSN, incomplete SSN, invalid SSN outside the valid SSN range, and so on.

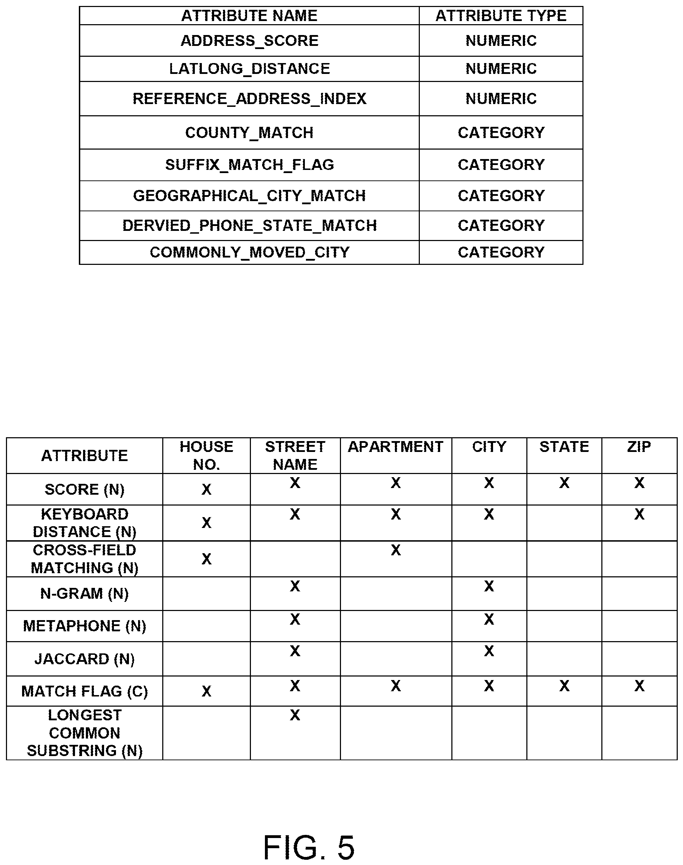

In FIG. 5, examples of data attributes generated for an address identifier are shown. The top table of FIG. 5 shows the attributes for the address identifier which can include numeric attributes and categorical attributes. The attributes include an identifier score for the address, denoted as address_score, for measuring the degree of matching between the address in the query record 102 ("query address") and the address in the reference record 202 ("reference address"). In some examples, the address score can be determined based on scores from each address component. Each component in address can be individually scored and the final score can be calculated based on a formula where each component score is multiplied by a weight. For example, the record-matching server 118 may include or implement parsers to identify different parts of the address. The record-matching server 118 may also be configured to identify insignificant parts of an address and assign a low or zero weight to that part. For example, the record-matching server 118 may determine that the two addresses have the same street name "Str." but different street numbers. A normal string match would provide 50% of match for the combination of the street name and number. But in this example, the record-matching server 118 can identify that the street name "Str." is insignificant and output these two addresses as no match or a low match through assigning zero or low weight to the street name portion. In some implementations, a lookup table can be utilized to list the insignificant part of the address, such as the street name "Str." The scores for individual components in the address can be determined using various techniques. For example, the scores can be derived based on analysis on how well each individual parts or components of an address can uniquely identify that address. For instance, if an address matches only on state, there will be thousands of addresses in that state. City match may be a bit better as there may be a few thousand addresses in the city. A street match can be much better at identifying a single address compared to state and city separately. In this example, a higher score can be assigned to a street match than a city match or a state match.

In some examples, the data records 128 can be configured to maintain a list of addresses including the current address and past addresses that were once associated with the entity represented by the reference record. In other words, there can be multiple addresses in the reference record and each of them can be used as the reference address to calculate the address score. These multiple addresses can be ordered chronologically so that the most recent address is listed first and the positions or indexes of the addresses in the list indicate how recent the respective addresses are. In these examples, the address score can be penalized or reduced if the reference address is a previous address. For example, a weighting factor can be added for the address score. If the matched address is in the most current position of the file for a query record, a full score is given; otherwise the score is penalized by a factor that linearly scales as to how old the matched address is. As such, the address score between the query address and the fourth reference address of the reference record can be a substantially lower score than an address score between the query address and the first reference address, which is the current address. The position or index of the reference address can also be included as an address attribute.

In addition to the street score, other attributes may be generated for the street identifier. For example, as shown in FIG. 5, these attributes can include a geographical distance between the query address and the reference address, such as latlong_distance. In certain applications, it has been observed that when people moved between addresses, it was very likely they moved within a certain small geographical distance. Latitude and longitude distance can thus be used to measure nearby addresses as physically nearby addresses could still have different zip codes or even different cities or states. In some implementations, Haversine distance can be used to measure the distance between geographical distance between the query address and the reference address.

The address attributes may further include a categorical attribute capturing patterns of cities people commonly move between. This attribute can serve a similar purpose to the geographical distance attribute. But the advantage of this attribute is that this attribute can be used for indexes as well. The attribute can use a precomputed lookup table built from the history of data records 128, identifying moving patterns and aggregating the patterns to identify top patterns. This attribute combined with the geographical distance attribute can help find people who changed their addresses.

Other attributes may include an address-frequency attribute. Some addresses may have an unusual number of data records mapped to them. This address-frequency attribute thus can be added to recognize such addresses. The prediction model may leverage this attribute and reduce the importance of address if too many data records are mapped to that address (e.g., 123 Main St). Another attribute that can be generated is a phone area code match. Phone area code can be derived from the first three digits of the phone number in the query record and matched to a current or past address of a reference record. This attribute could help in cases where people move from one address to another. This attribute only needs phone number information in the query record and not in the reference record.

In some examples, the address attributes can be generated using EDN standardized addresses. In some cases, however, not all addresses standardized by EDN were useable for attribute generation. As such, additional cleaning or parsing can be used. The additional parsing can parse or standardize common variations for highways and PO boxes such as HWY, Highway to a standard format. The parsing can also extract out the highway and PO box numbers for further matching. The parsing can also standardize common synonyms like "1ST" and "First." The parsing can standardize street types like Road to RD, Street to ST, etc. The parsing can also include extracting apartment numbers from addresses where apartment number is mixed with apartment type. For example, "APT12" can be parsed to "12." The parsing can also parse out the house number, the street name, the apartment number from full addresses. The parsing can be useful in case EDN does not standardize the address.

In addition, the address identifier can be tokenized before generating the address attributes. For example, the tokenization can include splitting cases where numeric characters are mixed with alphabets (e.g., "12TH" can be tokenized to "12" and "TH"). The tokenization can also address common "noise" words which can include words that do not add meaningful differentiating value, such as "TH." Eliminating noise words may also allow the matching to be more accurate. For example, for "12 TH" and "34 TH," although these two strings have "TH" in common, they are determined to be a no-match, rather than a 50% match. Tokenization with noise elimination can also lead to accurate matches. For example, "12 TH" and "12" can be considered 100% matching even though "TH" is missing in the second string. In some examples, the tokenization can also apply some special case noise words. Words such as "Highway" and "PO BOX" cannot be always eliminated. For example, "1" and "Highway 1" are not the same so "Highway" cannot be removed. But in another example when "Highway 1" and "Highway 2" are compared, the work "Highway" becomes a noise word and will be removed.

In some examples, cross-matching can also be performed in address matching. Cross-matching is a matching technique where the tokenized strings from each address component (house number, street name, apartment number) are matched between each other. The address matching can also extract out the exact PO BOX and Highway number such that accurate matching can occur. For example, if "Highway 1" and "Highway 2" are matched, it should score zero because "Highway" does not add value to the match on its own. The address matching can also consider different apartment types or variations such as "apartment," "APT" and "ROOM" to be the same. As such, matching can be performed for only apartment numbers and not on the apartment type.

The bottom table of FIG. 5 shows additional attributes for the address identifier that can be defined over the components of the address along with the techniques that can be used to generate the respective attributes. For example, the Metaphone algorithm can be used to generate attributes for each of the street name and the city name. The keyboard distance discussed above can be generated for each of the house number, street name, apartment name, city name, and zip code.

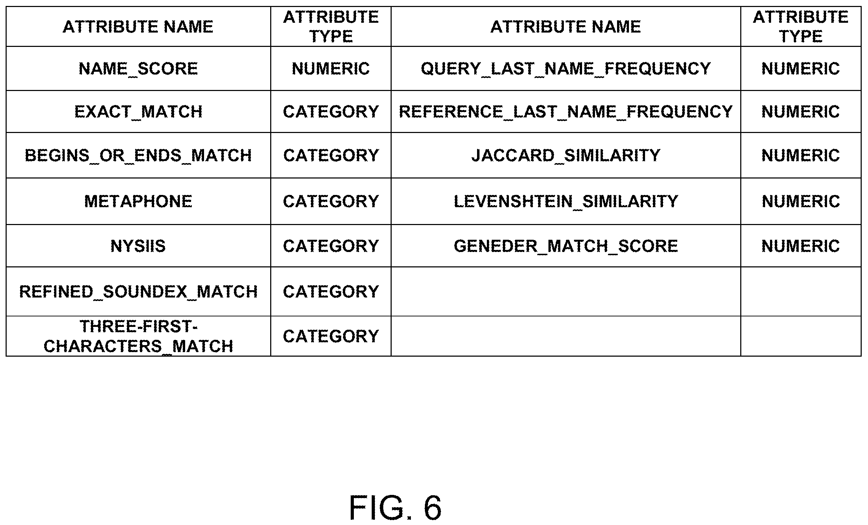

In FIG. 6, examples of data attributes generated for a name identifier are shown. The attributes for the name identifier can include numeric attributes and categorical attributes as listed in FIG. 6. The attributes include an identifier score for the name, denoted as name_score, for measuring the degree of matching between the name in the query record 102 ("query name") and the name in the reference record 202 ("reference name"). Similar to the numerical identifier score, the name identifier score can be generated based on whether the difference between the two names is due to unintentional mistakes or they are truly different. In particular, for names, the name attributes are generated assuming multiple names for each record including the query record and reference records, and attempting to handle common mistakes such as typos, misspellings, swapped names, multiple name components in a single field, etc.

Each name can go through a cleaning process that creates multiple versions of the name: original name, cleaned name, alpha only name, and tokenized name. The original name is the input name which is converted to uppercases. A cleaned name is generated by removing characters in the original name that are not Unicode letters or space, replacing tabs, new lines, and multiple spaces with a single space, and, converting accented letters to their non-accented equivalents. Leading and trailing spaces can be removed. The alpha-only name can be generated by removing spaces from the cleaned name and is only kept if it is different from the cleaned name. The tokenized name can be generated by tokenizing the cleaned name on spaces. The tokenized name is kept if more than one piece or token is available. For each name, a nickname can be found using the original name, cleaned name, and alpha-only name. The nickname can be searched for using the first name, middle name, and last name, which helps in scenarios where the name is reversed or a middle name reveals gender better than the first name.

Based on the different versions of the names, matches and similarities can be calculated. Matches and similarities can be calculated for pairs of cleaned names, pairs of alpha-only names, if available, and pairs of nicknames, if available. If a nickname or alpha-only version is available on one side (i.e., one of the query record and reference record), the nickname or alpha-only name can be compared to the cleaned name on the other side (i.e., the query record or reference record that does not have the nickname or alpha-only name). Tokenized names may also be compared.

In addition to typical exact matching, multiple distance metrics and fuzzy match techniques are used. For instance, multiple phonetic algorithms for matching components of names based on similar pronunciation may be used to generate a Metaphone attribute. The Metaphone algorithms can include Metaphone 2, the New York State identification and intelligence system (NYSIIS), a Soundex algorithm. Likewise, different distance measures, such as Levenshtein distance or Jaccard distance, can also be used to generate individual attributes. These attributes or a portion thereof may be used to generate the name identifier score. Suffixes in the names can also be identified and extracted from multiple fields. The suffixes can further be standardized and suffix matching may be performed.

Matching can thus include the following flags: exact match, three first character match, begins or ends match, Metaphone 2 match, NYSIIS match, and refined Soundex match. An exact match means that names match byte for byte. Three first characters match refers to the first three characters of both names match. Begins or ends match refers to one name begins or ends with another name. Metaphone 2 match means the Metaphone 2 representations of both names are the same. NYSIIS match means that the NYSIIS representations of both names are the same. Refined Soundex match means that the refined Soundex representations of both names are the same. Each similarity can include the following flags: Jaccard similarity and Levenshtein similarity. The Jaccard similarity can be used to measure the Jaccard distance normalized to a value between 0 and 1. 0 means two names are identical and 1 means two names are completely different. The Levenshtein similarity can be used to measure the Levenshtein distance normalized to [0, 1] where 0 means two names are identical and 1 means two names are completely different. For names that can be tokenized, tokens are de-duplicated, compared and a distance metric between 0 and 1 can be created where 0 means all tokens match exactly and 1 means not even a single token matches. This check can be performed when both names have at least two tokens.

As a result of name matching described above, match and similarity information can include nine combinations of names (for first, middle, and last names), up to three versions for each combination and additional tokenized name metrics. So the name score can be developed to decide if two names match. For each combination of names, a version of the name among the cleaned, alpha-only, nickname or tokenized name with the highest score is used. In some examples, the match score can be set to be 100 for an exact match, 95 for begins or ends match, 90 for Metaphone 2 match, 70 for NYSIIS match, 50 for three first characters match or refined Soundex match, and 0 for no match. The similarity score can be the average of the Jaccard distance metric and the Levenshtein distance metric normalized to [0, 100] with 100 indicating names are identical. In some examples, each name can be searched first directly and if not found, a Metaphone 2 representation can be used instead to find a match. The original name can be used first to do the search, then cleaned name, then alpha-only name, and then each of the name tokens to find a match with the largest number of occurrences in the data record 128.

In some examples, first name gender can also be calculated. The first name gender can be calculated by using a gender table that has a list of first names associated with gender. To improve gender identification, additional first names and their associated genders may be extracted from the data records 128 to establish a statistical association of names with genders. In some examples, only names that have at least thirty records with gender can be extracted.

Last name frequency can also be calculated. Last names that happen at least 30 times in the data records 128 can be extracted and stored with their respective counts or frequency. Using the frequency of the last names, more frequent names can be assigned less weight when determining the name score because individuals with frequent names should need more matching from other identifiers whereas individuals with rare names can be matched will less matching. In additional examples, the count of females and the count of males having a given name are also determined.

After calculating match and similarity scores for different variants of the name (cleaned, alpha only, and nickname), a score of how well two names (first to first, first to middle, etc.) match can be calculated. For example, the score can be selected as the maximum value of: average of match and similarity score for cleaned name, 0.95 * average of match and similarity score for alpha-only name, 0.90 * average of match and similarity score for nickname. The score can be adjusted to take into account the following scenarios. If gender derived from first names is defined and does not match, the score is multiplied by 0.80; if last name does not match (either cleaned, or alpha-only, or even a single token), the score is multiplied by 0.80.

With the score for each combination of names (first name to first name, first name to middle name, first name to last name, etc.), the overall match score name_score of the complete name against another complete name can be calculated. The name score can be determined as the maximum value of scores among the different combinations of names or a combination of these scores, such as the weighted sum of these scores. Various other ways to determine the name score based on the scores for different combinations of names can be utilized.

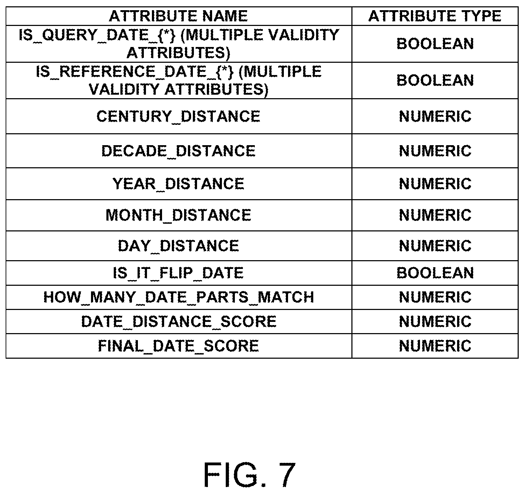

In FIG. 7, examples of data attributes generated for a date identifier, such as the data of birth, are shown. The attributes for the date identifier can include numeric attributes and categorical attributes as listed in FIG. 7. The attributes include an identifier score for the date, denoted as final_date_score in this example, for measuring the degree of matching between the two dates in the query record 102 and the reference record 202. Similar to the numerical identifier score, the date identifier score can be generated based on whether the difference between the two dates is due to unintentional mistakes or they are truly different.

To determine the date identifier score, the record-matching server 118 can calculate the date distance by calculating points between two dates. The points can be calculated for each part of a date: year, month, and day. For the year part, the points can be calculated for three categories: century, decade, and year. For example, for a date of December 28, 1949, "19" indicates the century, "4" indicates the decade, "9" indicates the year, "12" indicates the month, and "28" indicates the day. In some examples, a match in the century can be assigned 5% of points. A decade match or a year match can each be assigned 25% of points. A month match can be assigned 30% of points and the day match can be assigned 15% of points. The record-matching server 118 can further normalize the date score by multiplying the points obtained by a weight depending on how many parts of the dates match. For example, if only the year parts of the query date and the reference date match, the multiplication weight can be 25%. If both the year and month parts match, the multiplication weight can be 75%. If all three parts match, the weight is 100.

Additional attributes for the date-based identifier can be determined. For example, the record-matching server 118 can determine an attribute for storing calculated distance between input query date century and reference date century, an attribute for storing calculated distance between input query date decade and reference date decade, an attribute for storing calculated distance between input query date year and reference date year, an attribute for storing calculated distance between input query date day and reference date day, an attribute indicating if input date (month, day) matches with (day, month) of the reference date (i.e. flip dates are provided in input date field), and an attribute indicating how many input date field parts match with the reference date field (year, month, day). The distance can be calculated using any of the distance calculating methods described above. In some examples, the distance is defined such that the distance between January and December is larger than the distance between other pairs of months. The attributes for the date-based identifier can further include attributes indicating the validity of the input query date and the validity of the reference date, such as whether the query/reference date has all three parts, whether the year, month, and day have a valid respective value. In some examples, the attributes can be generated by considering the default values (e.g., January 1, 1900) assigned to a date identifier when the date identifier is not available. The record-matching server 118 can determine that the date value was unavailable if the date has the default value and thus return a no-match for the query date.

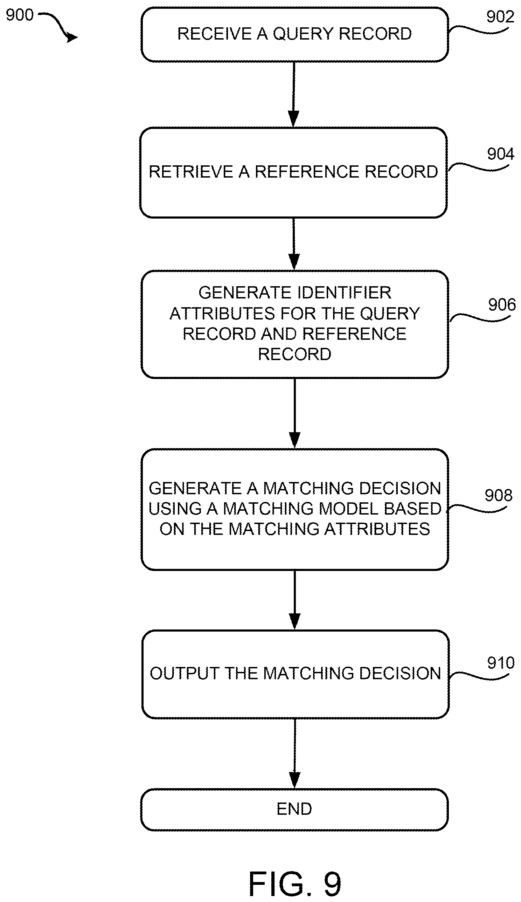

Referring now back to FIG. 3, at block 308, the process 300 involves determining an overall matching score for the query record 102 and the reference record 202. In some examples, the overall matching score can be determined based on the identifier scores discussed above with respect to FIGS. 4-7. In those examples, block 306 can involve generating the identifier scores without generating other identifier attributes. In other examples, identifier attributes in addition to the identifier scores discussed above may be generated and used to determine the matching according to other methods, such as the method described below with respect to FIG. 9.

To calculate the overall matching score, the record-matching server 118 can combine the identifier scores of the pair of records. In some examples, the record-matching server 118 can use volume scores to combine multiple score attributes to form a compound score attribute that reflects the quality of a match. In one example, the combination can be performed through multiplication and the compound score thus represents a volume, such as a prism or a pyramid. Multiple volume scores can be generated, such as by multiplying different set of three or more identifier scores. In further examples, the record-matching server 118 can generate surface area scores by combining pair-wise identifier scores to form a compound score attribute that reflects the quality of a match. The combination can be performed through multiplication and the compound score thus represents a shape area, such as a triangle or a quadrilateral.

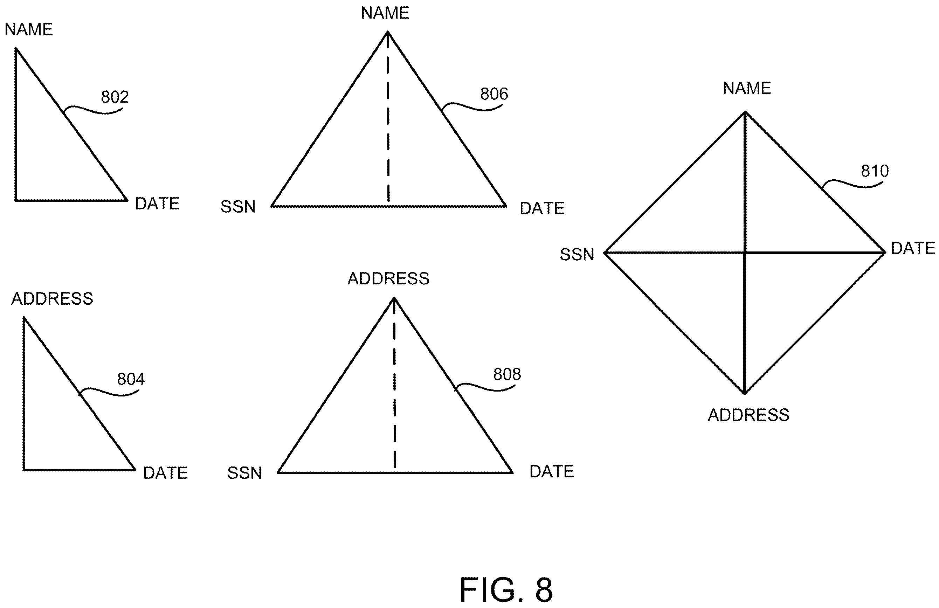

FIG. 8 illustrates compound surface area scores used to generate a matching decision, according to certain aspects of the present disclosure. For example, as shown in FIG. 8, a compound score generated by multiplying the name score and the date score corresponds to a triangle 802 with the two right-angle sides corresponding to the two identifier scores. Similarly, a triangle surface area composite score corresponding to the triangle 804 can be determined by multiplying the address identifier score and the date identifier score. Multiple surface area scores can also be combined to generate a combined compound score, such as the compound score corresponding to the triangle surface areas 806 and 808, and the compound score corresponding to the quadrilateral 810. As can be seen, various compound scores can be generated by combining, such as multiplying, different combinations of identifier scores. These compound scores can be further combined, such as through weighted average, to generate an overall matching score. In some examples, the four identifier scores can be combined to generate multiple area scores. For example, an area score can be generated by summing up pair-wise products among the four identifier scores. Different area scores can also be generated by taking different subsets of three identifier scores and summing up the pair-wise products among the three identifier scores.

Referring back to FIG. 3, at block 310, the process 300 involves generating and outputting the matching decision. In some examples, the record-matching server 118 can generate the matching decision by comparing the overall matching score with a threshold value of matching score. If the overall matching score is higher than the threshold value, the record-matching server 118 can determine that the query record 102 and reference record 202 match; otherwise, they do not match with each other.

In another example, machine learning models can be employed to determine the matching decision. FIG. 9 depicts an example of a process 900 for determining whether a reference record 202 matches a query record 102 based on a machine learning model, according to certain aspects of the present disclosure. For illustrative purposes, the process 900 is described with reference to implementations described above with respect to one or more examples described herein. Other implementations, however, are possible. In some aspects, the operations in FIG. 9 may be implemented in program code that is executed by one or more computing devices such as the record-matching server 118 depicted in FIG. 1. In some aspects of the present disclosure, one or more operations shown in FIG. 9 may be omitted or performed in a different order. Similarly, additional operations not shown in FIG. 9 may be performed.

At block 902, the process 900 involves receiving a query record 102 that contains one or more identifiers that can be used for matching. Block 902 is similar to block 302 in FIG. 3. As discussed above with respect to FIG. 3, the record-matching server 118 may receive the query record 102 from a client computing system 104 in a request to find matching records in the data record 128, or generate the query record 102 based on the information contained in the request received from the client computing system 104. In other examples, the query record 102 may be generated when the record-matching computing system 100 receives new data, for example from an external data source, to be stored as a data record 128 in the data repository 122. The record-matching server 118 generates the query record 102 based on the information in the received new data. If the record-matching server 118 finds no match for the query record 102 in the data record 128, a new data record 128 can be created in the data repository 122 to store the new data; otherwise, the received new data will be used to update the data record 128 that matches the query record 102. In this way, fragmented records can be avoided.

At block 904, the process 900 involves retrieving, from the data records 128, a reference record 202 that contains the one or more identifiers to be used for matching. Block 904 is similar to block 304 in FIG. 3. In some examples, the reference record 202 may be a record submitted by another system for matching purposes rather than obtained from the data records 128 in the data repository 122.

At block 906, the process 900 involves generating identifier attributes for each of the identifiers in the query record 102 and reference record 202 that are to be used for matching. Block 906 is similar to block 306 in FIG. 3. Details of generating the identifier attributes are provided above with respect to FIGS. 4-7. In some examples, the identifier attributes can also include the compound scores generated based on various combinations of the identifier scores as described above with respect to block 308.

At block 908, the process 900 involves generating a matching decision using a matching model 124 based on the identifier attributes generated at block 906. In some examples, the matching model 124 can be a model that is explainable and exportable as a rule set, such as a decision tree model, a random forest, or a repeated incremental pruning to produce error reduction (RIPPER)-based model. The record matching model 124 can be trained using training data to accept a set of identifier attributes generated for the pair of query record 102 and reference record 202 as input and output a matching decision. The input identifier attributes can include all or any portion of the identifier attributes generated at block 906. The training process of the record matching model 124 is described later with respect to FIGS. 10 and 11.

At block 910, the process 900 involves outputting the matching decision regarding whether the query record 102 matches the reference record 202. In some examples, the record matching model 124 may be further configured to output a matching score indicating the confidence level associated with the matching decision. Depending on the type of the record matching model 124, the matching score may be generated based on the predictions errors of leaf nodes in a decision tree model or prediction errors of trees in a random forest model.

FIG. 10 shows a flowchart depicting an example of a process 1000 for training a machine learning matching model 124 configured to determine a matching decision for a reference record 102 and a query record 104, according to certain aspects of the present disclosure. FIG. 10 will be described in conjunction with FIG. 11. FIG. 11 is a diagram illustrating the data flow in the training of the machine learning model, according to certain aspects of the present disclosure. For illustrative purposes, the process 1000 is described with reference to implementations described above with respect to one or more examples described herein. Other implementations, however, are possible. In some aspects, the operations in FIG. 10 may be implemented in program code that is executed by one or more computing devices such as the model training server 119 depicted in FIG. 1. In some aspects of the present disclosure, one or more operations shown in FIG. 10 may be omitted or performed in a different order. Similarly, additional operations not shown in FIG. 10 may be performed.

At block 1002, the process 1000 involves obtaining the training samples for the record matching model 124. As shown in FIG. 11, each of the training samples 130 can include input identifier attributes 1104 generated for a corresponding pair of training data records and a matching label 1106 for the pair. The input identifier attributes 1104 can include the identifier attributes described above with respect to block 906 of FIG. 9. In some examples, the training samples 130 include the pairs of training data records and the input identifier attributes 1104 are generated based on the training data records according to the method described above with respect to block 306 of FIG. 3 and block 906 of FIG. 3. The matching label 1106 indicates whether the pair of training data records match or not. In some examples, the matching label 1106 may be inaccurate and thus cannot serve as the ground truth for the training. As such, the training process 1000 may also be used to identify ground truth matching labels for the training samples 130.

In some examples, the training samples 130 can be selected from the data records 128 and the respective associated labels based on stratified sampling. In the data records 128, some patterns of the identifier values may be rare compared to others. The model training server 119 can first perform random sampling in the data record 128 by the type of matches indicated by the label, such as a match or no match. If the labels have flags other than match or no match, those flags can be mapped to match or no match. A stratified sample by scores is extracted on the randomly selected samples. In some examples, the score attributes, such as identifier scores, along with the compound scores (area scores and volume scores) are used for extracting out the stratified samples. The scores or compound scores can be rounded to the nearest integer before a stratified sample is extracted. Samples are also ensured to have each attribute value represented n times with n being a positive integer.

At block 1004, the process 1000 involves training the record matching model 124 and one or more auxiliary models 1108 using the training samples 130. As discussed above with respect to FIG. 9, the record matching model 124 may be a decision tree model, a random forest, a RIPPER model, or any other model that is explainable and exportable as a rule set. The training can involve supervised training using the input attributes and the current matching labels in the training samples 130. In some examples, the auxiliary models 1108 are employed in order to correct the matching label 1106 in the misclassified training samples. The auxiliary models 1108 can operate under different principles of classification and each can be configured to generate a classification of match or no-match based on attributes associated with a pair of records. Examples of the auxiliary models 1108 can include a naive Bayes model, a multi-layered perception model, a random forest model, and a support vector machine (SVC).

Each of the auxiliary models 1108 can be trained using the training samples 130 used to train the matching model 124. In some examples, the attributes input to each of the auxiliary models 1108 can include the input identifier attributes 1104 for the matching model 124. In other examples, the attributes input to each of the auxiliary models 1108 include a subset of the input identifier attributes 1104, such as the identifier scores and the compound scores. By using a subset of the input attributes 1104, the computational complexity of training the auxiliary models 1108, and thus training the record matching model 124, can be significantly reduced.

At block 1006, the process 1000 involves determining predicted classifications for the training samples using the initially trained record matching model 124. In other words, the input attributes 1104 in each training sample 1102 are input to the initially trained record matching model 124 to generate the respective predicted classifications 1108.

At block 1108, the process 1000 involves identifying misclassified training samples. The misclassified training samples can include training samples that are mistakenly labeled. In other words, the matching label 1106 in a training sample for a pair of matched records is incorrectly marked as no-match, or the matching label 1106 in a training sample for a pair of unmatched records is incorrectly marked as a match. The record-matching server 118 can identify a set of the training samples as misclassified training samples 1112 if the predicted classifications 1108 of the set of training samples 130 are different from the respective matching labels 1106.

At block 1010, the process 1000 involves the record-matching server 118 determining if there are any misclassified training samples 1112. If so, the process 1100 involves generating, at block 1012, predicted classifications for each of the misclassified training samples 1112 using the auxiliary models 1108, also referred to as auxiliary classification 1110. At block 1014, the process 1000 involves updating the misclassified training samples 1112 based on the auxiliary classification 1110 generated by the auxiliary models 1108.

In some examples, the auxiliary classifications 1110 are compared with each other to determine if the misclassified training samples need to be corrected. Because the auxiliary models 1108 have different underlying principles to predict the classifications, if a pair of records is a genuine match, the auxiliary models 1108 should agree on the classification. But if the auxiliary models 1108 do not agree on the predicted classifications, the pair of records should be further analyzed to determine the accurate label. For example, for a mismatched training sample, if the auxiliary classifications 1110 are consistent with the predicted classification by the matching model 124, the record-matching server 118 can change the matching label 1106 of the mismatched training sample to be consistent with the classification output by the matching model 124. If the auxiliary classifications 1110 include conflicting classifications, the record-matching server 118 can determine the matching label for the mismatched training sample based on a combination of the original matching label, the classification by the matching model, and the auxiliary classifications 1110 by the auxiliary matching models, such as through a majority voting. Alternatively, or additionally, the record-matching computing system can output the mismatched training sample to another system for further analysis to determine the correct matching label. The mismatched training samples whose matching labels are corrected can then be used to update the corresponding training sample 130.

The record matching model 124 can be re-trained using the updated training samples 130 at block 1004 and the operations in blocks 1006-1014 can be repeated until the record-matching server 118 determines, at block 1010, that there are no misclassified training samples. The process 1000 then involves, at block 1016, the record-matching server 118 outputting the trained record matching model 124 and the training samples 130. At this stage, the training samples 130 include the corrected matching labels 1106, which can be used as ground truth matching labels 1106.

Table 1 shows the testing results of the record matching model 124 on specific edge cases. These edge cases pose special challenges on the record matching model 124 because the pairs of records contain very similar information but represent different individuals. For example, for a pair of individual records representing twins, their address identifiers and date of birth identifiers are the same; their social security numbers differ only by one digit; their last names are the same and the first names are typically similar. As shown in Table 1, the matching model 124 can accurately identify them as being different persons rather than attributing the differences to accidental mistakes.

**Table 1. Classification accuracies of the record matching model 124 on edge cases**

| Type of edge case | Accuracy | Type of edge case | Accuracy |
|---|---|---|---|
| Twins | 98.33% | Siblings | 99.99% |
| Spouses | 99.98% | Father/son | 99.99% |
| Random people born on same day and has same first and last name | 98.73% | Random people with similar SSN (first 4 digits) and lived on same former Address | 100% |
| Same SSN but 4 different names | 95.79% | | |

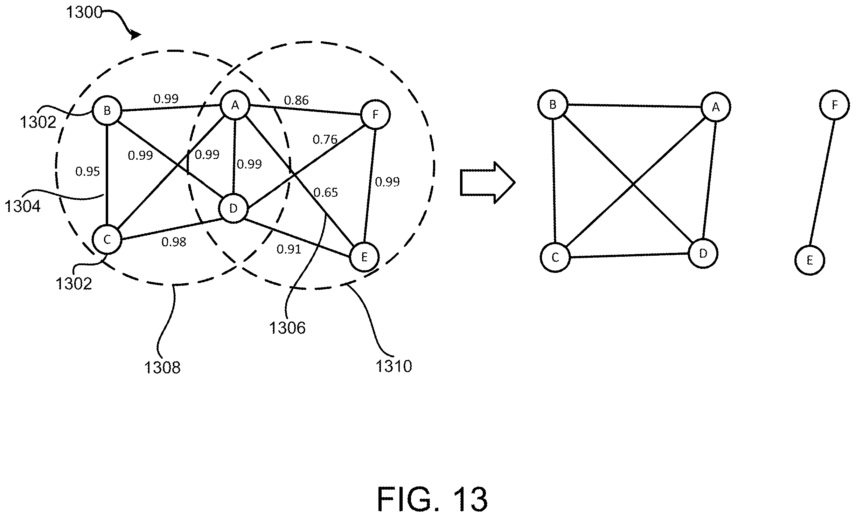

Referring now to FIG. 12, FIG. 12 is a flowchart depicting an example of a process 1200 for detecting fragmented files in a database, such as the database storing the data record 128 in the data repository 122. FIG. 12 will be described in conjunction with FIG. 13. FIG. 13 is a diagram illustrating an example of a graph for identifying fragmented records, according to certain aspects of the present disclosure.

For illustrative purposes, the process 1200 is described with reference to implementations described above with respect to one or more examples described herein. Other implementations, however, are possible. In some aspects, the operations in FIG. 12 may be implemented in program code that is executed by one or more computing devices such as the record-matching server 118 depicted in FIG. 1. In some aspects of the present disclosure, one or more operations shown in FIG. 12 may be omitted or performed in a different order. Similarly, additional operations not shown in FIG. 12 may be performed.

At block 1202, the process 1200 involves identifying a list of candidate records to be evaluated for merging. In some examples, every pair of data records 128 are evaluated for possible merge. However, for a database containing a large number of data records, such as tens of millions of data records, the computational complexity for examining each pair of data records is prohibitively high. As such, a subset of the data records 128 can be selected as a list of candidate records for potential merging.

In some examples, the record-matching server 118 can select the list of candidate records based on a candidate search criterion and search the set of data records to find records that satisfy the candidate search criterion. In some implementations, the candidate search criterion can specify a combination of identifier values. For example, the record-matching server 118 can use a combination of name (first name and last name) and zip code values to filter the data record 128 to obtain the list of candidate records containing the same name and zip code values. Likewise, the record-matching server 118 can also use other combinations of identifiers to select the list of candidate records, such as a combination of first name and social security number, a combination of name and date of birth, a combination of social security number and date of birth, and so on.

At block 1204, the process 1200 involves determining matching decisions and associated matching scores for pairs of candidate records in the list. The matching score associated with a matching decision can indicate the confidence level of the matching decision. A higher matching score indicates higher confidence in the associated matching decision and vice versa. The record-matching server 118 can select multiple pairs of candidate records from the list and determine the matching score for each pair by using the method discussed above with respect to FIG. 3 or FIG. 9 or any other matching method. For example, the record-matching server 118 can calculate the identifier scores for each pair of candidate records and determine the compound score based on the identifier scores as discussed above with respect to FIG. 3. The overall matching score generated based on the compound scores can be used as the matching score, and the matching decision based on the overall matching score can be used as the matching decision for the fragment file detection. Alternatively, or additionally, the record-matching server 118 can calculate the identifier attributes for the pair of candidate records and apply the record matching model 124 to the identifier attributes to determine the classification decision as shown in FIG. 9. As discussed above, the record matching model 124 can also be configured to output a matching score indicating the confidence level of the classification decision. The matching score can be used for the fragmented file detection as described herein.

At block 1206, the process 1200 involves generating a graph for the candidate records based on the matching scores and matching decisions. FIG. 13 shows an example of the graph. In the graph, each node 1302 represents a candidate record and an edge 1304 between two nodes indicates a match between the candidate records represented by the two nodes according to the matching decision. The value associated with edge 1304 indicates the matching score for the pair of candidate records. For example, the edge 1304 connecting nodes B and C indicates that the two data records represented by these two nodes match with each other according to the matching decision for this pair. The value 0.95 associated with the edge 1304 is the matching score associated with the matching decision which indicates relatively high confidence in the matching decision. Similarly, the edge 1306 connecting nodes A and E indicates that the data records represented by these two nodes match with each other but with a relatively low confidence score of 0.65. Pairs of nodes that do not have an edge connecting them are not considered as matching records according to the matching decisions, such as nodes B and F, nodes C and E.

Fragmented data records typically have similar identifiers, such as same or close names, same or close numerical identifiers, same or close address, and so on. As such, those pairs of nodes that have edges connecting them (indicating matches) can be good candidate nodes for merging. Pairs of nodes having edges with high matching scores are more likely to belong to the same record than pairs of nodes having edges low matching scores. For example, a first pair of nodes whose edge has a matching score of 0.95 are more likely to belong to the same data record than a second pair of nodes whose edge has a matching score of 0.65. Thus, the record-matching server 118 can merge the first pair of nodes, but not the second pair of nodes. Likewise, if three nodes have three edges each connecting two of the three nodes and all three edges have high matching scores, the record-matching server 118 can merge the three nodes with high confidence that they belong to the same data record.

Challenges arise when the nodes are not fully connected. For example, for three nodes A, B, and C, A is connected to B by an edge; A is further connected to C by another edge; but B and C are not connected. In this case, merging A and B or A and C can be problematic because B and C do not match. Either merging A and B or merging A and C would violate the matching decision between B and C. To address this kind of scenario and increase the precision of the merging, connected components are utilized. At block 1208, the process 1200 involves identifying connected components in the graph. A connected component of a graph is a subgraph in which any two nodes are connected to each other through one or more edges. In the example shown in FIG. 13, nodes A-F form a connected component 1300.

At block 1210, the process 1200 involves identifying qualified connected components within the connected components identified in block 1208 for merge. In some examples, a qualified connected component is a connected component or a portion of a connected component that has a minimum degree of connectivity above a threshold value of degree. For example, if the threshold value of degree is d, each node in a qualified connected component has at least d edges connected thereto. A higher value of d leads to higher precision in detecting fragmented data records but with a lower recall; a lower value of d leads to a lower precision in detecting fragmented data records but a higher recall. In some examples, to avoid over merging, the threshold value of degree is set to be N-1 with N being the number of nodes in the qualified connected component. In these examples, a qualified connected component is a clique.

At block 1214, the process 1200 involves determining whether there is at least one qualified connected component. If so, the process 1200 involves, at block 1216, merging records represented by the nodes in the respective qualified connected components. For example, if a qualified connected component contains five nodes, the five data records represented by the five nodes can be merged into one data record. If another qualified connected component contains four nodes, the four data records represented by the four nodes can be merged into one data record. As a result of the merging, each qualified connected component corresponds to one merged data record. In some examples, data records contained in a qualified connected components may contain conflicting identifier values. To handle this situation, the conflicting identifier values can be stored together in the merged data records. In further examples, an identifier can be added to indicate the original data record for each of the merged identifier values. These identifier can allow the merged data record to be split in the future based on an updated evidence.

At block 1218, the process 1200 involves updating the graph based on the merged data record. In some examples, the record-matching server 118 can determine the matching score and matching decision between each merged data record with other data records (original data records or merged data records) in the list of candidate records using any method used in block 1204. Based on the determined matching decisions and matching scores, the graph can be updated to remove the nodes and edges representing records that have been merged with other data records and include nodes and edges representing the merged records. With the updated graph, the process 1200 can repeat blocks 1208-1218 until there is no more qualified connected component in the graph. At that point, the process 1200 involves, at block 1220, outputting the list of records with some data records merged.

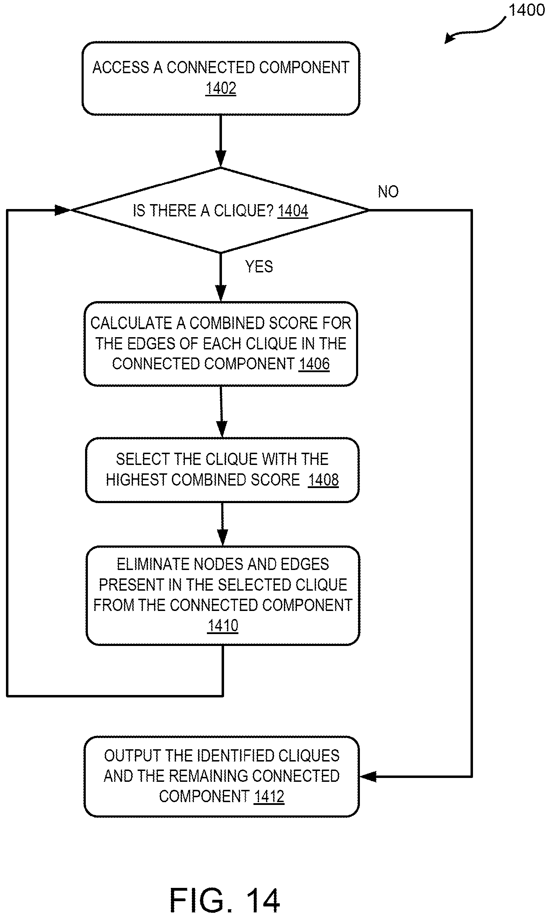

FIG. 14 shows a flowchart depicting an example of a process 1400 for identifying cliques as qualified connected components from a connected component for merging, according to certain aspects of the present disclosure. FIG. 14 can be used to implement block 1210 of FIG. 12. For illustrative purposes, the process 1400 is described with reference to implementations described above with respect to one or more examples described herein. Other implementations, however, are possible. In some aspects, the operations in FIG. 14 may be implemented in program code that is executed by one or more computing devices such as the record-matching server 118 depicted in FIG. 1. In some aspects of the present disclosure, one or more operations shown in FIG. 14 may be omitted or performed in a different order. Similarly, additional operations not shown in FIG. 14 may be performed.

At block 1402, the process 1400 involves accessing a connected component of the graph, such as the connected component 1300 formed by nodes A-F in FIG. 13. At block 1404, the process 1400 involves determining if there is any clique in the connected component. If yes, the process 1400 involves, at block 1406, calculating a combined score for the edges of each clique in the connected component. For example, the combined score can be the average matching score or the total matching score for edges of each clique. Using an average matching score can lead to more accurate fragment detection whereas using the total averaging score can lead to a larger clique to be selected for merging. Other ways of generating the combined score for a clique can also be used. For example, the record-matching server 118 can set a minimum size for a clique to be merged, such as four. In this example, the cliques having sizes no smaller than the minimum size can be identified and used for calculating the combined score. In the example shown in FIG. 13, the connected component 1300 contains multiple cliques, such as clique 1308 containing nodes A-D, clique 1310 containing nodes A, D, E, and F, the clique containing nodes A-C, the clique containing nodes A, C, D, and so on. The combined score can be generated for each of the cliques 1310 and 1308 if the minimum size of the clique is set as four.

At block 1408, the process 1400 involves selecting the clique with the highest combined score. In the example shown in FIG. 13, clique 1308 has a higher combined score (either average score or total sum score) than the clique 1310. As such, clique 1308 is selected. At block 1410, the process 1400 involves eliminating nodes and edges present in the selected clique from the connected component. In the example shown in FIG. 13, after removing the selected clique 1308, the connected component only has two nodes remaining, nodes E and F and their associated edge. The process 1400 further evaluates, at block 1404, whether there is any clique in the updated connected component. If so, blocks 1406-1410 are repeated for the cliques in the connected component. In the example shown in FIG. 13, the updated connected component has a clique E and F left. The combined score is calculated for the edge and the clique is selected and removed from the connected component.

When there is no more clique left in the connected component, the process 1400 involves, at block 1412, outputting the identified cliques and the remaining connected component. In the example shown in FIG. 13, two cliques are identified and there is nothing left for the connected component 1300.

Although FIG. 14 focuses on identifying cliques from a connected component for merging, this process can be used to identify any qualified connected component for fragment detection and merging by replacing cliques with the corresponding definition of the qualified connected component.

### Example of Computing Environment for Record Matching and Fragmented File Detection

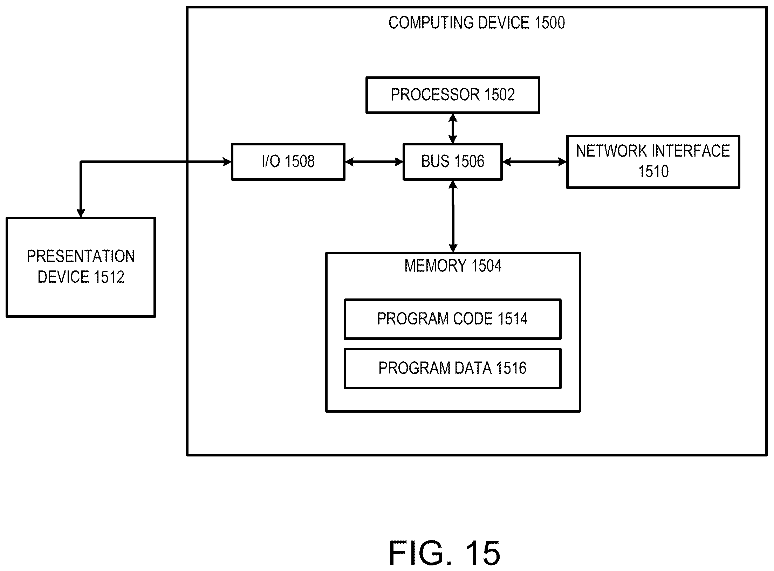

Any suitable computing system or group of computing systems can be used to perform the operations for record matching and fragmented file detection described herein. For example, FIG. 15 is a block diagram depicting an example of a computing device 1500 which can be the record-matching server 118 or the model training server 119. The example of the computing device 1500 can include various devices for communicating with other devices in the record-matching computing system 100, as described with respect to FIG. 1. The computing device 1500 can include various devices for performing one or more operations described above with respect to FIGS. 1-14.

The computing device 1500 can include a processor 1502 that is communicatively coupled to a memory 1504. The processor 1502 executes computer-executable program code stored in the memory 1504, accesses information stored in the memory 1504, or both. Program code may include machine-executable instructions that may represent a procedure, a function, a subprogram, a program, a routine, a subroutine, a module, a software package, a class, or any combination of instructions, data structures, or program statements. A code segment may be coupled to another code segment or a hardware circuit by passing or receiving information, data, arguments, parameters, or memory contents. Information, arguments, parameters, data, etc. may be passed, forwarded, or transmitted via any suitable means including memory sharing, message passing, token passing, network transmission, among others.

Examples of a processor 1502 include a microprocessor, an application-specific integrated circuit, a field-programmable gate array, or any other suitable processing device. The processor 1502 can include any number of processing devices, including one. The processor 1502 can include or communicate with a memory 1504. The memory 1504 stores program code that, when executed by the processor 1502, causes the processor to perform the operations described in this disclosure.

The memory 1504 can include any suitable non-transitory computer-readable medium. The computer-readable medium can include any electronic, optical, magnetic, or other storage device capable of providing a processor with computer-readable program code or other program code. Non-limiting examples of a computer-readable medium include a magnetic disk, memory chip, optical storage, flash memory, storage class memory, ROM, RAM, an ASIC, magnetic storage, or any other medium from which a computer processor can read and execute program code. The program code may include processor-specific program code generated by a compiler or an interpreter from code written in any suitable computer-programming language. Examples of suitable programming language include Hadoop, C, C++, C#, Visual Basic, Java, Python, Perl, JavaScript, ActionScript, etc.

The computing device 1500 may also include a number of external or internal devices such as input or output devices. For example, the computing device 1500 is shown with an input/output interface 1508 that can receive input from input devices or provide output to output devices. A bus 1506 can also be included in the computing device 1500. The bus 1506 can communicatively couple one or more components of the computing device 1500.

The computing device 1500 can execute program code that includes the record matching service 120, fragmented file detection service 121, or model training service 123. The program code for the record matching service 120, fragmented file detection service 121, or model training service 123 may be resident in any suitable computer-readable medium and may be executed on any suitable processing device. For example, as depicted in FIG. 15, the program code for the record matching service 120, fragmented file detection service 121, or model training service 123 can reside in the memory 1504 at the computing device 1500. Executing the record matching service 120, fragmented file detection service 121, or model training service 123 can configure the processor 1502 to perform the operations described herein.

In some aspects, the computing device 1500 can include one or more output devices. One example of an output device is the network interface device 1510 depicted in FIG. 15. A network interface device 1510 can include any device or group of devices suitable for establishing a wired or wireless data connection to one or more data networks described herein. Non-limiting examples of the network interface device 1510 include an Ethernet network adapter, a modem, etc.

Another example of an output device is the presentation device 1512 depicted in FIG. 15. A presentation device 1512 can include any device or group of devices suitable for providing visual, auditory, or other suitable sensory output. Non-limiting examples of the presentation device 1512 include a touchscreen, a monitor, a speaker, a separate mobile computing device, etc. In some aspects, the presentation device 1512 can include a remote client-computing device that communicates with the computing device 1500 using one or more data networks described herein. In other aspects, the presentation device 1512 can be omitted.

The foregoing description of some examples has been presented only for the purpose of illustration and description and is not intended to be exhaustive or to limit the disclosure to the precise forms disclosed. Numerous modifications and adaptations thereof will be apparent to those skilled in the art without departing from the scope of the disclosure.

## Claims

1. A method (300) that includes one or more processing devices (1502) performing operations comprising:
receiving (302) a query record (102) comprising a first value of a numerical identifier; and
searching in a set of data records (128) for a matching record of the query record, the searching comprising:
retrieving (304) a reference record (202) from the set of data records, the reference record comprising a second value of the numerical identifier;
generating (306) a numerical identifier score measuring a degree of matching between the first value of the numerical identifier and the second value of the numerical identifier, the numerical identifier score generated based on a keyboard distance between mismatching digits of the first value and the second value of the numerical identifier, wherein the keyboard distance is determined based on an edit distance algorithm comprising a weighting factor, wherein the weighting factor penalizes mismatching keys distant from one another in a keyboard layout more than mismatching keys close to one another in a keyboard layout, and wherein depending on the keyboard layout the keyboard distance is calculated as keyboard distance 1D for 1D keyboard and keyboard distance 2D for 2D keyboard;
generating (308) an overall matching score (218) by combining at least the numerical identifier score and a second identifier score generated for a second identifier of the query record and the reference record; and
determining (310) the reference record as a match to the query record based on the overall matching score exceeding a threshold value.

2. The method of claim 1, wherein the numerical identifier score is additionally generated based on a probability distribution of errors over digits of the numerical identifier.

3. The method (300) of claim 1 or 2, wherein the second identifier is a name identifier, and the query record (102) comprises a query name for the name identifier and the reference record (202) comprises a reference name for the name identifier, the method further comprising:
generating (306), as the second identifier score, a name identifier score measuring a degree of matching between the query name and the reference name by:
processing the query name and the reference name to create multiple variants for each of the query name and the reference name;
calculating a similarity score for each combination of the variants of the query name and the reference name; and
calculating the name identifier score based on the similarity scores for the combinations of the variants of the query name and the reference name.

4. The method (300) of claim 3, wherein the similarity score for each combination of the variants of the query name and the reference name is adjusted based on the frequency of a last name in the query name and the reference name.

5. The method (300) of claim 1 or 2, wherein the second identifier is an address identifier, the query record (102) comprising a first address for the address identifier and the reference record (202) comprising one or more reference addresses for the address identifier chronologically ordered, and wherein the searching further comprises:
generating (306), as the second identifier score, an address identifier score measuring a degree of matching between the first address and the one or more reference addresses, the address identifier score generated based on matching scores for individual address components of the first address and the one or more reference addresses and respective positions of the one or more reference addresses in the reference record.

6. The method (300) of claim 1 or 2, wherein the second identifier is a date identifier, and the query record (102) comprises a first date for the date identifier and the reference record (202) comprise a second date for the date identifier, the method further comprising:
generating (306), as the second identifier score, a date identifier score measuring a degree of matching between the first date and the second date by:
calculating similarities between the first date and the second date based on years, months, and days in the first date and the second date; and
generating the date identifier score based on a weighted combination of the similarities.

7. The method (300) of claim 1 or 2, wherein generating (308) the overall matching score by combining at least the numerical identifier score and the second identifier score comprises:
calculating a surface area score (802, 804) by multiplying the numerical identifier score and the second identifier score.

8. The method (300) of claim 1 or 2, wherein each of the query record (102) and the reference record (202) further comprises a third identifier and a fourth identifier, wherein the searching further comprises calculating (306) a third identifier score and a fourth identifier score, and wherein the overall matching score is further generated (308) by combining two or more of the numerical identifier score, the second identifier score, the third identifier score and the fourth identifier score, the combining comprising:
calculating a surface area score (802, 804) by multiplying two of the numerical identifier score, the second identifier score, the third identifier score, and the fourth identifier score; or
calculating a volume score (806, 808) by multiplying three of the numerical identifier score, the second identifier score, the third identifier score, and the fourth identifier score.

9. The method (300) of claim 8, wherein the second identifier is a date identifier, the third identifier is a name identifier, and the fourth identifier is an address identifier.

10. The method (300) of claim 9, wherein the numerical identifier represents a social security number of an individual, the name identifier represents a name of an individual, the address identifier represents a physical address associated with the individual, and the date identifier represents a date of birth of the individual.

11. A record-matching computing system (100, 1500), comprising:
a processing device (1502);
a data repository (122) for storing data records (128) regarding entities, wherein each data record comprises a numerical identifier and a date identifier; and
a non-transitory computer-readable storage medium (1504) having program code executable by the processing device to perform operations comprising the method (300) of any preceding claim.

12. A non-transitory computer-readable storage medium (1504) having program code (1514) executable by a processing device (1502) to perform operations comprising the method (300) of any of claims 1-10.

## Patentansprüche

1. Eine Methode (300), die ein oder mehrere Verarbeitungsgeräte (1502) umfasst, die Operationen ausführen, daraus:
den Empfang (302) eines Abfrageeintrags (102), der einen ersten Wert einer numerischen Kennung enthält; und
Suche in einem Datensatz (128) nach einem passenden Datensatz des Abfragedatensatzes, wobei die Suche Folgendes umfasst:
Abruf (304) eines Referenzdatensatzes (202) aus dem Datensatz, wobei der Referenzdatensatz einen zweiten Wert des numerischen Identifikators umfasst;
Erzeugung (306) eines numerischen Identifikator-Scores, der einen Grad der Übereinstimmung zwischen dem ersten Wert der numerischen Kennung und dem zweiten Wert der numerischen Kennung misst, der numerische Identifikator-Score basierend auf einem Tastaturabstand zwischen den falschen Ziffern des ersten Wertes und des zweiten Wertes der numerischen Kennung erzeugt wird, wobei der Tastaturabstand anhand eines Edit-Distance-Algorithmus mit einem Gewichtungsfaktor bestimmt wird, wobei der Gewichtungsfaktor Tastenabweichungen in einem Tastaturlayout eher bestraft als Tasten, die nahe beieinander liegen, und wobei je nach Tastaturanordnung der Tastaturabstand als 1D für 1D-Tastatur und 2D für 2D-Tastatur berechnet wird;
Erzielung (308) eines Gesamtmatching-Scores (218), indem mindestens der numerische Identifikator-Wert und ein zweiter Identifikator-Wert für einen zweiten Identifikator des Abfragedatensatzes und des Referenzdatensatzes kombiniert wird; und
wobei (310) der Referenzdatensatz als Übereinstimmung zum Abfragedatensatz auf Grundlage des gesamten Matching-Scores über einem Schwellenwert bestimmt wird.

2. Die Methode der Behauptung 1, bei der der numerische Identifikator-Wert zusätzlich auf Basis einer Wahrscheinlichkeitsverteilung von Fehlern über Ziffern der numerischen Kennung erzeugt wird.

3. Die Methode (300) von Anspruch 1 oder 2, wobei die zweite Kennung eine Namenskennung ist, und der Abfrageeintrag (102) einen Abfragenamen für die Namenskennung und der Referenzeintrag (202) einen Referenznamen für die Namenskennung enthält, wobei die Methode weiter umfasst:
indem (306) als zweiter Identifikator-Wert ein Namensbekennungswert misst, der einen Grad der Übereinstimmung zwischen dem Abfragenamen und dem Referenznamen misst durch:
die Verarbeitung des Abfragenamens und des Referenznamens, um mehrere Varianten für jeden der Anfragenamen und den Referenznamen zu erstellen;
Berechnung eines Ähnlichkeitswerts für jede Kombination der Varianten des Abfragenamens und des Referenznamens; und
Berechnung des Namensbekennungswerts basierend auf den Ähnlichkeitswerten für die Kombinationen der Varianten des Abfragenamens und des Referenznamens.

4. Die Methode (300) von Anspruch 3, bei der der Ähnlichkeitswert für jede Kombination der Varianten des Abfragenamens und des Referenznamens anhand der Häufigkeit eines Nachnamens im Abfragenamen und des Referenznamens angepasst wird.

5. Die Methode (300) von Anspruch 1 oder 2, wobei die zweite Kennung eine Adresskennung ist, der Abfrageeintrag (102) mit einer ersten Adresse für die Adresskennung und der Referenzeintrag (202) aus einer oder mehreren Referenzadressen für die Adresskennung chronologisch geordnet und bei der die Suche weiter:
Generierend (306) als zweiter Identifikator-Score einen Adress-Identifikator-Score, der einen Grad der Übereinstimmung zwischen der ersten Adresse und einer oder mehreren Referenzadressen misst, den Adress-Identifikator-Score, der auf der Übereinstimmung von Werten für einzelne Adresskomponenten der ersten Adresse sowie für eine oder mehrere Referenzadressen und die jeweiligen Positionen einer oder mehrerer Referenzadressen im Referenzdatensatz erzeugt wird.

6. Die Methode (300) von Anspruch 1 oder 2, wobei die zweite Kennung eine Datumskennung ist und der Abfragedatensatz (102) ein erstes Datum für die Datumskennung und der Referenzdatensatz (202) ein zweites Datum für die Datumskennung darstellen, wobei die Methode weiter:
Erzeugung (306), als zweiter Identifikator-Score, eines Datums-Identifikator-Scores, der einen Grad der Übereinstimmung zwischen dem ersten und dem zweiten Datum misst, durch:
Berechnung der Ähnlichkeiten zwischen dem ersten und zweiten Datum basierend auf Jahren, Monaten und Tagen des ersten und zweiten Datums; und
Die Erstellung des Datumsidentifikators basiert auf einer gewichteten Kombination der Ähnlichkeiten.

7. Die Methode (300) der Behauptung 1 oder 2, bei der (308) der Gesamt-Matching-Score durch Kombination von mindestens dem numerischen Identifikator-Score und dem zweiten Identifikator-Score erzeugt wird, umfasst:
Berechnung eines Surface Area-Scores (802, 804) durch Multiplikation des numerischen Identifikator-Scores mit dem zweiten Identifikator-Score.

8. Die Methode (300) von Anspruch 1 oder 2, bei der jeder der Abfragedatensätze (102) und der Referenzdatensatz (202) zudem einen dritten und einen vierten Identifikator umfasst, wobei die Suche weiter die Berechnung eines dritten Identifikatorscores und eines vierten Identifikatorscores umfasst und der Gesamtmatchscore (308) durch Kombination von zwei oder mehr numerischen Identifikatoren erzeugt wird, der zweite Identifikator-Wert, der dritte Identifikator-Wert und der vierte Identifikator-Wert, wobei die Kombination Folgendes umfasst:
Berechnung eines Surface Area Scores (802, 804) durch Multiplikation von zwei numerischen Identifikator-Werten, dem zweiten Identifikator-Score, dem dritten und dem vierten Identifikator-Score; oder
Berechnung eines Volumen-Scores (806, 808) durch Multiplikation von drei numerischen Identifikator-Werten, dem zweiten Identifikator-Score, dem dritten und dem vierten Identifikator-Score.

9. Die Methode (300) von Anspruch 8, wobei der zweite Kennner ein Datumskennung, der dritte ein Namenskennner und der vierte Kennner eine Adresskennung ist.

10. Die Methode (300) des Anspruchs 9, bei der die numerische Kennung eine Sozialversicherungsnummer einer Person darstellt, die Namenskennung den Namen einer Person, die Adresskennung eine physische Adresse, die der Person zugeordnet ist und die Datumskennung ein Geburtsdatum der Person darstellt.

11. Ein Datensatzabgleich-Rechensystem (100, 1500), bestehend aus:
ein Verarbeitungsgerät (1502);
ein Datenarchiv (122) zur Speicherung von Datensätzen (128) zu Entitäten, wobei jeder Datensatz eine numerische Kennung und eine Datumskennung umfasst; und
ein nicht-transitorisches, computerlesbares Speichermedium (1504), dessen Programmcode vom Verarbeitungsgerät ausführbar ist, um Operationen auszuführen, die die Methode (300) eines beliebigen vorherigen Anspruchs umfassen.

12. Ein nicht-transitorisches, computerlesbares Speichermedium (1504) mit Programmcode (1514), der von einem Verarbeitungsgerät (1502) ausführbar ist, um Operationen durchzuführen, die die Methode (300) eines der Ansprüche 1-10 umfassen.

## Revendications

1. Une méthode (300) qui inclut un ou plusieurs dispositifs de traitement (1502) effectuant des opérations comprenant :
recevoir (302) un enregistrement de requête (102) comprenant une première valeur d'un identifiant numérique ; et
Recherche dans un ensemble d'enregistrements de données (128) un enregistrement correspondant de l'enregistrement de requête, la recherche comprenant :
récupérer (304) un enregistrement de référence (202) à partir de l'ensemble des enregistrements de données, l'enregistrement de référence comprenant une seconde valeur de l'identifiant numérique ;
générer (306) un score d'identifiant numérique mesurant un degré de correspondance entre la première valeur de l'identifiant numérique et la seconde valeur de l'identifiant numérique, le score d'identifiant numérique généré à partir d'une distance au clavier entre les chiffres incompatibles de la première valeur et de la seconde valeur de l'identifiant numérique, où la distance du clavier est déterminée selon un algorithme de distance d'édition comprenant un facteur de pondération, où le facteur de pondération pénalise davantage les touches éloignées les unes des autres que les touches proches dans une disposition de clavier, et où, selon la disposition du clavier, la distance du clavier est calculée comme une distance clavier 1D pour un clavier 1D et une distance clavier 2D pour un clavier 2D ;
générer (308) un score global de correspondance (218) en combinant au moins le score d'identifiant numérique et un second score d'identifiant généré pour un second identifiant de l'enregistrement de requête et de l'enregistrement de référence ; et
déterminer (310) l'enregistrement de référence comme correspondant à l'enregistrement de requête en fonction du score global de correspondance dépassant une valeur seuil.

2. La méthode de l'affirmation 1, dans laquelle le score d'identifiant numérique est généré en plus à partir d'une distribution de probabilité d'erreurs sur les chiffres de l'identifiant numérique.

3. La méthode (300) de la revendication 1 ou 2, où le second identifiant est un identifiant de nom, et l'enregistrement de requête (102) comprend un nom de requête pour l'identifiant de nom et l'enregistrement de référence (202) comprend un nom de référence pour l'identifiant de nom, la méthode comprenant en outre :
générant (306), comme second score d'identifiant, un score d'identifiant de nom mesurant un degré de correspondance entre le nom de requête et le nom de référence par :
le traitement du nom de la requête et du nom de référence pour créer plusieurs variantes pour chacun des noms de requête et du nom de référence ;
le calcul d'un score de similarité pour chaque combinaison des variantes du nom de la requête et du nom de référence ; et
Calculer le score de l'identifiant du nom basé sur les scores de similarité pour les combinaisons des variantes du nom de requête et du nom de référence.

4. La méthode (300) de l'affirmation 3, dans laquelle le score de similarité pour chaque combinaison des variantes du nom de requête et du nom de référence est ajusté en fonction de la fréquence d'un nom de famille dans le nom de requête et dans le nom de référence.

5. La méthode (300) de la revendication 1 ou 2, où le second identifiant est un identifiant d'adresse, l'enregistrement de requête (102) comprenant une première adresse pour l'identifiant d'adresse et l'enregistrement de référence (202) comprenant une ou plusieurs adresses de référence pour l'identifiant d'adresse ordonnées chronologiquement, et où la recherche supplémentaire comprend :
générant (306), en tant que second score d'identifiant, un score d'identifiant d'adresse mesurant un degré de correspondance entre la première adresse et une ou plusieurs adresses de référence, le score d'identifiant d'adresse généré en fonction des scores de correspondance pour les composantes individuelles de la première adresse, une ou plusieurs adresses de référence et positions respectives de l'une ou plusieurs adresses de référence dans l'enregistrement de référence.

6. La méthode (300) de la revendication 1 ou 2, où le second identifiant est un identifiant de date, et l'enregistrement de requête (102) comprend une première date pour l'identifiant de date et l'enregistrement de référence (202) constitue une seconde date pour l'identifiant de date, la méthode comprenant en outre :
générant (306), comme second score d'identificateur, un score d'identification de date mesurant un degré de correspondance entre la première et la deuxième date par :
calculer les similitudes entre la première et la deuxième date en fonction des années, des mois et des jours de la première et de la deuxième date ; et
générant le score de l'identifiant de date basé sur une combinaison pondérée des similarités.

7. La méthode (300) de l'affirmation 1 ou 2, dans laquelle la génération (308) du score global de correspondance en combinant au moins le score d'identifiant numérique et le second score d'identifiant, comprend :
calculer un score de surface (802, 804) en multipliant le score d'identification numérique et le score du second identifiant.

8. La méthode (300) de l'affirmation 1 ou 2, dans laquelle chaque enregistrement de requête (102) et l'enregistrement de référence (202) comprend en outre un troisième identifiant et un quatrième identifiant, où la recherche consiste en plus à calculer (306) un score de troisième identifiant et un score de quatrième identifiant, et où le score global de correspondance est généré (308) en combinant deux ou plus scores d'identifiant numérique, le deuxième score d'identifiant, le troisième score d'identifiant et le quatrième score d'identifiant, la combinaison comprenant :
le calcul d'un score de surface (802, 804) en multipliant deux scores d'identifiant numérique, le deuxième score d'identifiant, le score du troisième identifiant et le quatrième score d'identifiant ; ou
Calculer un score de volume (806, 808) en multipliant trois des scores d'identifiant numérique, le score du deuxième identifiant, le score du troisième identifiant et le score du quatrième identifiant.

9. La méthode (300) de la revendication 8, où le second identifiant est un identifiant de date, le troisième identifiant un identifiant de nom, et le quatrième identifiant un identifiant d'adresse.

10. La méthode (300) de la revendication 9, dans laquelle l'identifiant numérique représente le numéro de sécurité sociale d'un individu, l'identifiant de nom représente le nom d'un individu, l'identifiant d'adresse représente une adresse physique associée à l'individu, et l'identifiant de date représente la date de naissance de l'individu.

11. Un système informatique de correspondance de records (100, 1500), comprenant :
un dispositif de traitement (1502) ;
un dépôt de données (122) pour stocker des enregistrements de données (128) concernant des entités, dans lequel chaque enregistrement de données comprend un identifiant numérique et un identifiant de date ; et
un support de stockage informatique lisible non transitoire (1504) dont le code de programme peut être exécuté par le dispositif de traitement pour effectuer des opérations constituant la méthode (300) de toute revendication précédente.

12. Un support de stockage informatique lisible non transitoire (1504) ayant un code de programme (1514) exécutable par un dispositif de traitement (1502) pour effectuer des opérations comprenant la méthode (300) de l'une des revendications 1 à 10.
